(19) **Europäisches Patentamt European Patent Office Office européen des brevets**

(11) **EP 4 395 250 B1**

(12) **EUROPEAN PATENT SPECIFICATION**

(45) Date of publication and mention
of the grant of the patent:
**05.08.2026 Bulletin 2026/32**

(21) Application number: **22860346.0**

(22) Date of filing: **17.08.2022**

(51) International Patent Classification (IPC):
*H04L 27/26* (2006.01)    *H04B 1/692* (2011.01)
*H04B 1/707* (2011.01)    *H04J 13/00* (2011.01)
*H04J 13/16* (2011.01)

(52) Cooperative Patent Classification (CPC):
**H04B 1/692; H04B 1/707; H04J 13/00;**
**H04J 13/0048; H04J 13/16; H04L 27/26;**
H04J 13/0025; H04J 13/0029

(86) International application number:
**PCT/CN2022/113052**

(87) International publication number:
**WO 2023/025000 (02.03.2023 Gazette 2023/09)**

(54) **SPECTRUM SPREADING METHOD AND APPARATUS AND READABLE STORAGE MEDIUM**

SPEKTRUMSSPREIZVERFAHREN UND -VORRICHTUNG UND LESBARES SPEICHERMEDIUM

PROCÉDÉ ET APPAREIL D'ÉTALEMENT DE SPECTRE ET SUPPORT DE STOCKAGE LISIBLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.08.2021  CN 202110970685**

(43) Date of publication of application:
**03.07.2024  Bulletin 2024/27**

(73) Proprietor: **Vivo Mobile Communication Co., Ltd.**
**Dongguan, Guangdong 523863 (CN)**

(72) Inventors:
• **YUAN, Pu**
**Dongguan, Guangdong 523863 (CN)**
• **JIANG, Dajie**
**Dongguan, Guangdong 523863 (CN)**
• **LIU, Hao**
**Dongguan, Guangdong 523863 (CN)**

(74) Representative: **Lavoix**
**Bayerstraße 83**
**80335 München (DE)**

(56) References cited:
EP-B1- 2 865 153        CN-A- 102 273 114
CN-A- 113 098 818       CN-A- 113 098 818
US-A1- 2011 243 197     US-A1- 2021 250 138

• **SUN JINJING ET AL: "An Orthogonal Time Frequency Space Direct Sequence Modulation Scheme", 2021 IEEE INTERNATIONAL CONFERENCE ON COMMUNICATIONS WORKSHOPS (ICC WORKSHOPS), IEEE, 14 June 2021 (2021-06-14), pages 1 - 6, XP033938828, DOI: 10.1109/ ICCWORKSHOPS50388.2021.9473505**

**Description**

**CROSS-REFERENCE TO RELATED APPLICATIONS**

This application claims priority to Chinese Patent Application No. 202110970685.2, entitled "SPECTRUM SPREADING METHOD AND APPARATUS, COMMUNICATION DEVICE, AND READABLE STORAGE MEDIUM" filed on August 23, 2021.

**TECHNICAL FIELD**

This application relates to the field of communication technologies, and specifically, to a spectrum spreading method and apparatus, a communication device, and a readable storage medium.

**BACKGROUND**

A spectrum spreading technology is a communication technology for spreading a baseband signal into a wider frequency band by injecting one higher-frequency signal. The spectrum spreading technology has a plurality of technical implementations, and is mainly to add an index (also referred to as a code or a sequence) to a communication channel.

The existing spectrum spreading technology performs spectrum spreading based on a modulation symbol vector. However, how to implement signal spectrum spreading for a symbol matrix is a technical problem to be resolved urgently.

US2021250138A1 discloses techniques for achieving overlapping operation of wireless networks in which OTFS and LTE protocols are used for communication between the network and user devices. EP2865153B1 discloses a system and method of providing a modulated signal useable in a signal transmission system. SUN JINJING ET AL (2021) "An Orthogonal Time Frequency Space Direct Sequence Modulation Scheme" 2021 IEEE INTERNATIONAL CONFERENCE ON COMMUNICATIONS WORKSHOPS (ICC WORKSHOPS), discloses an orthogonal time frequency space direct sequence modulation scheme. CN113098818A discloses a method for interleaving and mapping orthogonal spread spectrum data.

**SUMMARY**

Embodiments of this application provide a spectrum spreading method and apparatus, and a readable storage medium, to resolve a problem about how to implement signal spectrum spreading for a symbol matrix. The invention is set out in independent claims 1, 8 and 15. The preferred embodiments are defined in dependent claims 2-7 and 9-14.

In the embodiments of this application, a modulation symbol is mapped to a transform domain, and spectrum spreading is performed on the modulation symbol in the transform domain based on a target spectrum spreading code, thereby spreading the modulation symbol of a symbol matrix into a wider frequency band, so that a diversity gain of a communication system can be increased.

**BRIEF DESCRIPTION OF THE DRAWINGS**

FIG. 1 is a structural diagram of a wireless communication system to which an embodiment of this application is applicable;
FIG. 2 is a first schematic flowchart of a spectrum spreading method according to an embodiment of this application;
FIG. 3 is a second schematic flowchart of a spectrum spreading method according to an embodiment of this application;
FIG. 4 is a third schematic flowchart of a spectrum spreading method according to an embodiment of this application;
FIG. 5 is a fourth schematic flowchart of a spectrum spreading method according to an embodiment of this application;
FIG. 6 is a fifth schematic flowchart of a spectrum spreading method according to an embodiment of this application;
FIG. 7 is a sixth schematic flowchart of a spectrum spreading method according to an embodiment of this application;
FIG. 8 is a seventh schematic flowchart of a spectrum spreading method according to an embodiment of this application;
FIG. 9 is an eighth schematic flowchart of a spectrum spreading method according to an embodiment of this application;
FIG. 10 is a schematic structural diagram of a spectrum spreading apparatus according to an embodiment of this application;

FIG. 11 is a schematic structural diagram of a communication device according to an embodiment of this application;

FIG. 12 is a schematic diagram of a hardware structure of a terminal according to an embodiment of this application; and

FIG. 13 is a schematic structural diagram of a network-side device according to an embodiment of this application.

## DETAILED DESCRIPTION

The following clearly describes the technical solutions in the embodiments of this application with reference to the accompanying drawings in the embodiments of this application. Apparently, the described embodiments are merely some but not all of the embodiments of this application.

The specification and claims of this application, and terms "first" and "second" are used to distinguish similar objects, but are not used to describe a specific sequence or order. It should be understood that, the terms used in this way is exchangeable in a proper case, so that the embodiments of this application can be implemented in another order except those shown or described herein. In addition, objects distinguished by "first" and "second" usually belong to one type, and a quantity of objects is not limited. For example, there may be one or more first objects. In addition, "and/or" in this specification and the claims represents at least one of the connected objects. The character "/" usually indicates an "or" relationship between associated objects.

It should be noted that, the technologies described in the embodiments of this application are not limited to the Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in the embodiments of this application. The described technologies can be applied to the systems and radio technologies mentioned above, and can also be applied to other systems and radio technologies. The following descriptions describe a new radio (New Radio, NR) system for an example purpose, and NR terms are used in most of the following descriptions, but these technologies may also be applied to an application other than the NR system application, such as a 6th Generation (6th Generation, 6G) communication system.

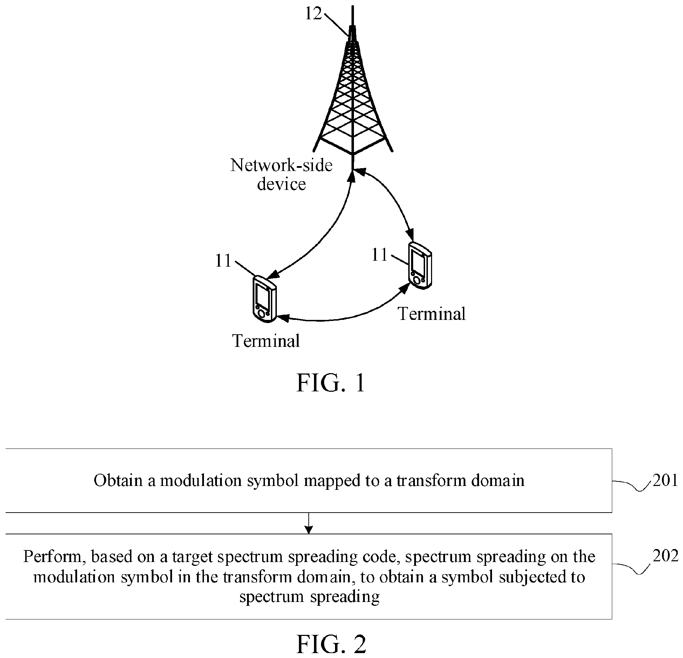

FIG. 1 is a structural diagram of a wireless communication system to which an embodiment of this application is applicable. The wireless communication system includes a terminal 11 and a network-side device 12. The terminal 11 may be also referred to as a terminal device or user equipment (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle UE (VUE), a pedestrian UE (PUE), or a smart home appliance (a home device having a wireless communication function, for example, a refrigerator, a television (Television, TV), a washing machine, or furniture). The wearable device includes: a smart watch, a smart band, a smart headset, smart glasses, a smart jewelry (a smart bangle, a smart bracelet, a smart ring, a smart necklace, a smart anklet bracelet, a smart anklet chain, or the like), a smart wristband, a smart costume, a game console, or the like. It should be noted that the specific type of the terminal 11 is not limited in the embodiments of this application. The network-side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a Wi-Fi node, a transmitting receiving point (Transmitting Receiving Point, TRP), or another proper term in the field. As long as a same technical effect is achieved, the base station is not limited to a specific technical term. It should be noted that only a base station in an NR system is used as an example in the embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that only a core network device in an NR system is used as an example in the embodiments of this application for description, but a specific type of the core network device is not limited.

A spectrum spreading method provided in the embodiments of this application is described in detail below with reference to the accompanying drawings by using some embodiments and application scenarios thereof.

An embodiment of this application provides a spectrum spreading method. In the spectrum spreading method, a modulation symbol is mapped to a transform domain, and spectrum spreading is performed on the modulation symbol in the transform domain based on a target spectrum spreading code, thereby spreading the modulation symbol of a symbol matrix into a wider frequency band, so that a diversity gain of a communication system can be increased.

FIG. 2 is a first schematic flowchart of a spectrum spreading method according to an embodiment of this application. As shown in FIG. 2, the method includes the following steps:

Step 201: Obtain a modulation symbol mapped to a transform domain.

It should be noted that an execution body of the spectrum spreading method provided in this embodiment of this application may be a spectrum spreading apparatus, or a control module configured to execute the spectrum spreading method in the spectrum spreading apparatus.

This embodiment of this application is applicable to a scenario of a multi-carrier system. According to the invention, in the multi-carrier system, a plurality of modulation symbols are mapped to a transform domain, and modulation symbols mapped to the transform domain are represented using a two-dimensional modulation symbol set. The two-dimensional modulation symbol set corresponds to a two-dimensional plane grid, and exists in the form of one two-dimensional matrix. The transform domain may include any one of the following types: a delay Doppler domain, a delay angle domain, a delay sequence domain, and the like.

It should be noted that in a dimension of a symbol matrix defined in a time-frequency domain, another symbol matrix obtained by performing a linear transform operation may be considered as a two-dimensional symbol set in a transform domain.

Step 202: Perform, based on a target spectrum spreading code, spectrum spreading on the modulation symbol in the transform domain, to obtain a symbol subjected to spectrum spreading.

Optionally, a pseudo random sequence such as a Barker sequence, an M sequence, a Gold sequence, or a Walsh-Hadamard (Walsh-Hadamard) code may be used as the target spectrum spreading code.

According to the invention, modulation symbols mapped to the transform domain, that is, a two-dimensional modulation symbol set, exists in the form of one two-dimensional matrix, and spectrum spreading of this embodiment of this application may be performed in one or two dimensions for the two-dimensional modulation symbol set. Optionally, the target spectrum spreading code may include: a first spectrum spreading code and/or a second spectrum spreading code, the first spectrum spreading code is a row vector, and the second spectrum spreading code is a column vector. The first spectrum spreading code may be used for performing spectrum spreading on a row vector of the two-dimensional modulation symbol set, and the second spectrum spreading code may be used for performing spectrum spreading on a column vector of the two-dimensional modulation symbol set.

In the spectrum spreading method provided in this embodiment of this application, a modulation symbol is mapped to a transform domain, and spectrum spreading is performed on the modulation symbol in the transform domain based on a target spectrum spreading code, thereby spreading the modulation symbol of a symbol matrix into a wider frequency band, so that a diversity gain of a communication system can be increased.

Optionally, in a multi-user scenario, a manner of determining a target spectrum spreading code used by a user may include:

(1) A target spectrum spreading code used by a user may be related to a user identifier (ID), and the target spectrum spreading code is generated according to the user ID. For example, a spectrum spreading code is generated according to a user ID. For example, an initial value or a shift value of a linear shift register (LSFR) of an M sequence or a Gold sequence is related to the user ID.

(2) A target spectrum spreading code used by a user may be specified or configured by a transmitter-side device (for example, a base station). For example, the transmitter-side indicates one specific codebook through broadcast signaling, each user generates an index of a specific codebook according to a user ID, and each user selects a target spectrum spreading code according to an index value lookup table.

(3) A target spectrum spreading code used by a user may be specified or configured by a transmitter-side device (for example, a base station). For example, one group of candidate target spectrum spreading codes are preconfigured by the transmitter-side device and indicated to a plurality of receiver-sides through a broadcast signal, and then a specific spectrum spreading code used by each UE is indicated to each UE through DCI/RRC.

Optionally, in a single-user scenario, a manner of determining a target spectrum spreading code used by a user may include:

(1) A target spectrum spreading code used by a user may be predefined by a protocol.

(2) Walsh-Hadamard codes in different orders may be directly used as a target spectrum spreading code used by a user. For example, a target spectrum spreading code of a first layer may be obtained by spreading a Walsh-Hadamard code with a length of 2, a target spectrum spreading code of a second layer may be obtained by spreading a Walsh-Hadamard code with a length of 4, and other layers are similar to the foregoing layers.

(3) A target spectrum spreading code used by a user may be related to a user ID, and the target spectrum spreading code is generated according to the user ID.

(4) A target spectrum spreading code used by a user may be related to a transport layer index and a user ID, and may be specified or configured by a transmitter-side device (for example, a base station). For example, one group of candidate target spectrum spreading codes are preconfigured by the transmitter-side device and indicated to a receiver-side through a broadcast signal, and then one group of specific configurations <a layer quantity and a spectrum spreading code used by each layer> are indicated through DCI/RRC.

Optionally, a target spectrum spreading code may be obtained by obtaining a plurality of spectrum spreading codes and interleaving the plurality of spectrum spreading codes. Specifically, a target spectrum spreading code may be generated by interleaving a plurality of spectrum spreading codes. For example, a target spectrum spreading code is generated by interleaving J PN sequences with a length of r, and therefore it may be considered that J equivalent delay Doppler sub-channels exist, and delay Doppler characteristics between the sub-channels are changed because of point multiplication by different complex sequences, that is, a space diversity is implemented through different spectrum spreading codes.

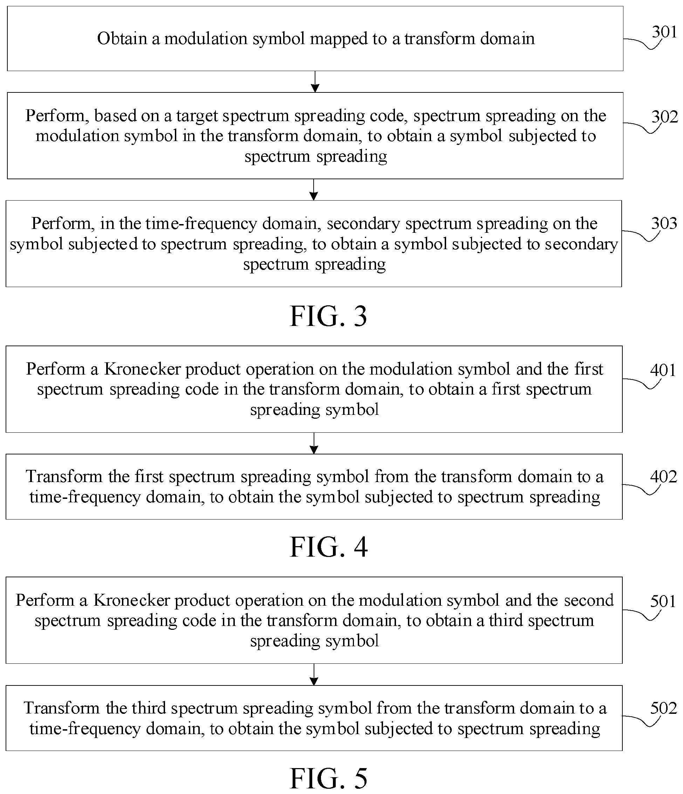

FIG. 3 is a second schematic flowchart of a spectrum spreading method according to an embodiment of this application. As shown in FIG. 3, the method includes the following steps:

Step 301: Obtain a modulation symbol mapped to a transform domain.

Step 302: Perform, based on a target spectrum spreading code, spectrum spreading on the modulation symbol in the transform domain, to obtain a symbol subjected to spectrum spreading.

It should be noted that for description and explanation about steps 301 and 302, reference may be made to the foregoing steps 201 and 202, and the same technical effect can be achieved. To avoid repetition, details are not described herein again.

Step 303: Perform, in the time-frequency domain, secondary spectrum spreading on the symbol subjected to spectrum spreading, to obtain a symbol subjected to secondary spectrum spreading.

Optionally, spectrum spreading is performed on a modulation symbol mapped to a transform domain in a multi-carrier system in the transform domain, and then spectrum spreading is performed again on a symbol subjected to spectrum spreading in a time-frequency domain, to further increase a diversity gain of a communication system.

In the spectrum spreading method provided in this embodiment of this application, a target spectrum spreading code is introduced into a multi-carrier system, and spectrum spreading is performed on a modulation symbol mapped to a transform domain in both the transform domain and a time-frequency domain, so that a modulation symbol in a two-dimensional plane grid can be spread into a wider frequency band, to implement signal spectrum spreading in a scenario of the multi-carrier system of a communication system, and a diversity gain of the communication system can be increased.

According to the invention, based on the spectrum spreading method shown in FIG. 2 and FIG. 3, specific implementations of the spectrum spreading method provided in this embodiment of this application includes any one of the following spectrum spreading manners 1-4:

Spectrum spreading manner 1: Perform, based on the target spectrum spreading code, spectrum spreading on the modulation symbol row by row in the transform domain, to obtain the symbol subjected to spectrum spreading, where the target spectrum spreading code includes a first spectrum spreading code and the first spectrum spreading code is a row vector.

Spectrum spreading manner 2: Perform, based on the target spectrum spreading code, spectrum spreading on the modulation symbol column by column in the transform domain, to obtain the symbol subjected to spectrum spreading, where the target spectrum spreading code includes a second spectrum spreading code and the second spectrum spreading code is a column vector.

Spectrum spreading manner 3: Perform, based on the target spectrum spreading code, spectrum spreading on the modulation symbol sequentially row by row and column by column in the transform domain, to obtain the symbol subjected to spectrum spreading, where the target spectrum spreading code includes a first spectrum spreading code and a second spectrum spreading code, the first spectrum spreading code is a row vector, and the second spectrum spreading code is a column vector.

Spectrum spreading manner 4: Perform, based on the target spectrum spreading code, spectrum spreading on the modulation symbol sequentially column by column and row by row in the transform domain, to obtain the symbol subjected to spectrum spreading, where the target spectrum spreading code includes a first spectrum spreading code and a second spectrum spreading code, the first spectrum spreading code is a row vector, and the second spectrum spreading code is a column vector.

Spectrum spreading manner 5: Perform, based on any one of the spectrum spreading manners 1 to 4 and in the time-frequency domain, spectrum spreading on the symbol subjected to spectrum spreading column by column, to obtain the symbol subjected to secondary spectrum spreading.

Spectrum spreading manner 6: Perform, based on any one of the spectrum spreading manners 1 to 4 and in the time-frequency domain, spectrum spreading on the symbol subjected to spectrum spreading row by row, to obtain the symbol subjected to secondary spectrum spreading.

Spectrum spreading manner 7: Perform, based on any one of the spectrum spreading manners 1 to 4 and in the time-frequency domain, spectrum spreading on the symbol subjected to spectrum spreading row by row and column by column, to obtain the symbol subjected to secondary spectrum spreading.

Spectrum spreading manner 8: Perform, based on any one of the spectrum spreading manners 1 to 4 and in the time-frequency domain, spectrum spreading on the symbol subjected to spectrum spreading column by column and row by row, to obtain the symbol subjected to secondary spectrum spreading.

Spectrum spreading manner 9: Compared with the spectrum spreading manners 1 to 8, in the spectrum spreading manner 9, spectrum spreading is not performed on the two-dimensional modulation symbol set in the transform domain; instead, the two-dimensional modulation symbol set is first transformed from the transform domain to the time-frequency domain to obtain a first modulation symbol, and then spectrum spreading is performed on the first modulation symbol in the time-frequency domain.

Each of the foregoing spectrum spreading manners is described below as follows:

Description for the spectrum spreading manner 1: the target spectrum spreading code includes a first spectrum spreading code and the first spectrum spreading code is a row vector; and spectrum spreading is performed on the modulation symbol row by row based on the first spectrum spreading code in the transform domain, to obtain the first spectrum spreading symbol, and the first spectrum spreading symbol is transformed from the transform domain to the time-frequency domain, to obtain the symbol subjected to spectrum spreading.

FIG. 4 is a third schematic flowchart of a spectrum spreading method according to an embodiment of this application. As shown in FIG. 4, the method includes the following steps:

Step 401: Perform a Kronecker product (Kronecker product) operation on the modulation symbol and the first spectrum spreading code in the transform domain, to obtain a first spectrum spreading symbol.

Optionally, it is assumed that a two-dimensional modulation symbol set is denoted as $X_{MN}$, where $M$ and $N$ respectively represent a row and a column of the two-dimensional modulation symbol set; and a first spectrum spreading code $s_p$ has a length of $p$, a second spectrum spreading code $s'_q$ has a length of $q$, and the second spectrum spreading code $S'_q$ is a transpose of a spectrum spreading code $s_q$.

Optionally, a Kronecker product operation is performed on $X_{MN}$ and $s_p$ in the transform domain, to obtain a first spectrum spreading symbol $X_{MN} \otimes s_p$, where $\otimes$ represents the Kronecker product operation.

Step 402: Transform the first spectrum spreading symbol from the transform domain to a time-frequency domain, to obtain the symbol subjected to spectrum spreading.

Optionally, the first spectrum spreading symbol $X_{MN} \otimes s_p$ is transformed from the transform domain to the time-frequency domain, to obtain the symbol $L_M(X_{MN} \otimes s_p)L_{pN}$ subjected to spectrum spreading, where $L_M$ is an equivalent linear transform matrix (square matrix) corresponding to a case that linear transform is performed on a row of $X_{MN} \otimes s_p$, and $L_{pN}$ is an equivalent linear transform matrix corresponding to a case that linear transform is performed on a column of $X_{MN} \otimes s_p$.

In the spectrum spreading method provided in this embodiment of this application, spectrum spreading is performed on a modulation symbol mapped to a two-dimensional plane grid in a multi-carrier system row by row in a transform domain, so that a modulation symbol in a two-dimensional plane grid can be spread into a wider frequency band, and a diversity gain of the communication system can be increased.

Description for the spectrum spreading manner 2: the target spectrum spreading code includes a second spectrum spreading code and the second spectrum spreading code is a column vector; and spectrum spreading is performed on the modulation symbol column by column based on the second spectrum spreading code in the transform domain, to obtain the third spectrum spreading symbol, and the third spectrum spreading symbol is transformed from the transform domain to the time-frequency domain, to obtain the symbol subjected to spectrum spreading.

FIG. 5 is a fourth schematic flowchart of a spectrum spreading method according to an embodiment of this application. As shown in FIG. 5, the method includes the following steps:

Step 501: Perform a Kronecker product operation on the modulation symbol and the second spectrum spreading code in the transform domain, to obtain a third spectrum spreading symbol.

Optionally, it is assumed that a two-dimensional modulation symbol set is denoted as $X_{MN}$, where $M$ and $N$ respectively represent a row and a column of the two-dimensional modulation symbol set; and a first spectrum spreading

code $s_p$ has a length of $p$, a second spectrum spreading code $s'_q$ has a length of $q$, and the second spectrum spreading code $s'_q$ is a transpose of a spectrum spreading code $s_q$.

Optionally, a Kronecker product operation is performed on $X_{MN}$ and $s'_q$ in the transform domain, to obtain a third spectrum spreading symbol $X_{MN} \otimes s'_q$, where $\otimes$ represents the Kronecker product operation.

Step 502: Transform the third spectrum spreading symbol from the transform domain to a time-frequency domain, to obtain the symbol subjected to spectrum spreading.

Optionally, the third spectrum spreading symbol $X_{MN} \otimes s'_q$ is transformed from the transform domain to the time-frequency domain, to obtain the symbol $L_{qM}(X_{MN} \otimes s'_q)L_N$ subjected to spectrum spreading, where $L_{qM}$ is an equivalent linear transform matrix corresponding to a case that linear transform is performed on a row of $X_{MN} \otimes S'_q$, and $L_N$ is an equivalent linear transform matrix corresponding to a case that linear transform is performed on a column of $X_{MN} \otimes s'_q$.

In the spectrum spreading method provided in this embodiment of this application, spectrum spreading is performed on a modulation symbol mapped to a two-dimensional plane grid in a multi-carrier system column by column in a transform domain, so that a modulation symbol in a two-dimensional plane grid can be spread into a wider frequency band, and a diversity gain of the communication system can be increased.

Description for the spectrum spreading manners 3 and 4: the target spectrum spreading code includes a first spectrum spreading code and a second spectrum spreading code, the first spectrum spreading code is a row vector, and the second spectrum spreading code is a column vector; and spectrum spreading is performed on the modulation symbol row by row based on the first spectrum spreading code in the transform domain, to obtain the first spectrum spreading symbol, and spectrum spreading is performed on the first spectrum spreading symbol column by column based on the second spectrum spreading code, to obtain the fifth spectrum spreading symbol; or spectrum spreading is performed on the modulation symbol column by column based on the second spectrum spreading code in the transform domain, to obtain the third spectrum spreading symbol, and spectrum spreading is performed on the third spectrum spreading symbol row by row based on the first spectrum spreading code, to obtain the fifth spectrum spreading symbol. Then, the fifth spectrum spreading symbol is transformed from the transform domain to the time-frequency domain, to obtain the symbol subjected to spectrum spreading.

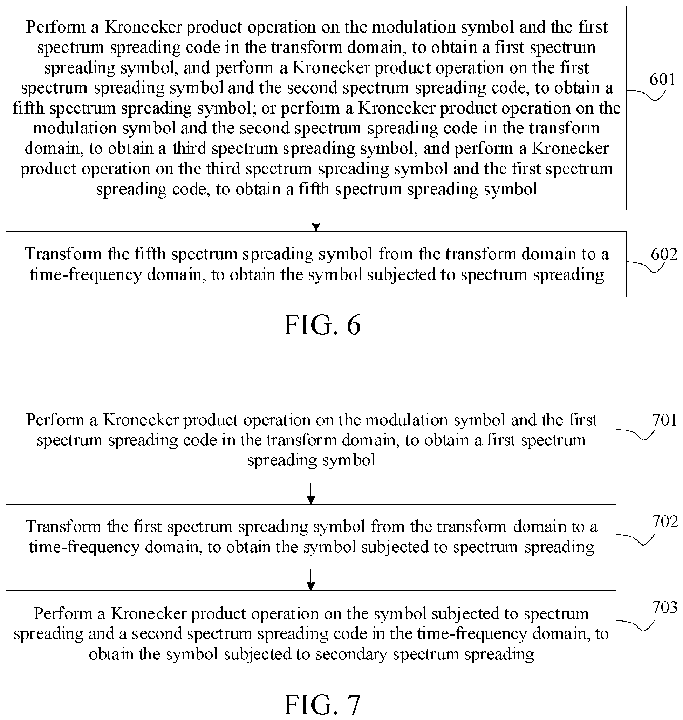

FIG. 6 is a fifth schematic flowchart of a spectrum spreading method according to an embodiment of this application. As shown in FIG. 6, the method includes the following steps:

Step 601: Perform a Kronecker product operation on the modulation symbol and the first spectrum spreading code in the transform domain, to obtain a first spectrum spreading symbol, and perform a Kronecker product operation on the first spectrum spreading symbol and the second spectrum spreading code, to obtain a fifth spectrum spreading symbol; or perform a Kronecker product operation on the modulation symbol and the second spectrum spreading code in the transform domain, to obtain a third spectrum spreading symbol, and perform a Kronecker product operation on the third spectrum spreading symbol and the first spectrum spreading code, to obtain a fifth spectrum spreading symbol.

Optionally, it is assumed that a two-dimensional modulation symbol set is denoted as $X_{MN}$, where $M$ and $N$ respectively represent a row and a column of the two-dimensional modulation symbol set; and a first spectrum spreading code $s_p$ has a length of $p$, a second spectrum spreading code $s'_q$ has a length of $q$, and the second spectrum spreading code $s'_q$ is a transpose of a spectrum spreading code $s_q$.

Optionally, a Kronecker product operation is performed on $X_{MN}$ and $s_p$ in the transform domain, to obtain a first spectrum spreading symbol $X_{MN} \otimes s_p$, and then a Kronecker product operation is performed on $X_{MN} \otimes s_p$ and $s'_q$, to obtain a fifth spectrum spreading symbol $X_{MN} \otimes s_p \otimes s'_q$.

Alternatively, a Kronecker product operation is performed on $X_{MN}$ and $s'_q$ in the transform domain, to obtain a third spectrum spreading symbol $X_{MN} \otimes s'_q$, and then a Kronecker product operation is performed on $X_{MN} \otimes s'_q$ and $s_p$, to obtain $X_{MN} \otimes s'_q \otimes s_p$ that is equivalent to a fifth spectrum spreading symbol $X_{MN} \otimes s_p \otimes s'_q$.

Spectrum spreading is performed on a modulation symbol mapped to a two-dimensional plane grid in a multi-carrier system both row by row and column by column in the transform domain based on step 601, so that the quantity of modulation symbols or the quantity of transmission sampling points is increased by p multiplied by q times, and a diversity gain of p multiplied by q times is provided.

Step 602: Transform the fifth spectrum spreading symbol from the transform domain to a time-frequency domain, to obtain the symbol subjected to spectrum spreading.

Optionally, the fifth spectrum spreading symbol $X_{MN} \otimes s_p \otimes s'_q$ is transformed from the transform domain to the time-frequency domain, to obtain the symbol $L_{qM}(X_{MN} \otimes s_p \otimes s'_q)L_{pN}$ subjected to spectrum spreading, where $L_{qM}$ is an equivalent linear transform matrix (square matrix) corresponding to a case that linear transform is performed on a row of $X_{MN} \otimes s_p \otimes s'_q$, and $L_{pN}$ is an equivalent linear transform matrix corresponding to a case that linear transform is performed on a column of $X_{MN} \otimes s_p \otimes s'_q$.

**In** the spectrum spreading method provided in this embodiment of this application, spectrum spreading is performed on a modulation symbol mapped to a two-dimensional plane grid in a multi-carrier system both row by row and column by column in a transform domain, so that a modulation symbol in a two-dimensional plane grid can be spread into a wider frequency band, and a diversity gain of the communication system can be increased.

Description for the spectrum spreading manner 5: the spectrum spreading manner 5 based on the spectrum spreading manner 1 is used as an example, and it is assumed that the fourth spectrum spreading code is the same as the second spectrum spreading code: spectrum spreading is performed on the modulation symbol row by row based on the first spectrum spreading code in the transform domain, to obtain the first spectrum spreading symbol, and the first spectrum spreading symbol is transformed from the transform domain to the time-frequency domain, to obtain the symbol subjected to spectrum spreading. Further, spectrum spreading is performed on the symbol subjected to spectrum spreading column by column based on the fourth spectrum spreading code in the time-frequency domain, to obtain the symbol subjected to secondary spectrum spreading, where the fourth spectrum spreading code is a column vector.

FIG. 7 is a sixth schematic flowchart of a spectrum spreading method according to an embodiment of this application. As shown in FIG. 7, the method includes the following steps:

Step 701: Perform a Kronecker product operation on the modulation symbol and the first spectrum spreading code in the transform domain, to obtain a first spectrum spreading symbol.

Optionally, it is assumed that a two-dimensional modulation symbol set is denoted as $X_{MN}$, where $M$ and $N$ respectively represent a row and a column of the two-dimensional modulation symbol set; and a first spectrum spreading code $s_p$ has a length of $p$, a second spectrum spreading code $s'_q$ has a length of $q$, and the second spectrum spreading code $s'_q$ is a transpose of a spectrum spreading code $s_q$.

Optionally, a Kronecker product operation is performed on $X_{MN}$ and $s_p$ in the transform domain, to obtain a first spectrum spreading symbol $X_{MN} \otimes s_p$, where $\otimes$ represents the Kronecker product operation.

Step 702: Transform the first spectrum spreading symbol from the transform domain to a time-frequency domain, to obtain the symbol subjected to spectrum spreading.

Optionally, the first spectrum spreading symbol $X_{MN} \otimes s_p$ is transformed from the transform domain to the time-frequency domain, to obtain the symbol $L_M(X_{MN} \otimes s_p)L_{pN}$ subjected to spectrum spreading, where $L_M$ is an equivalent linear transform matrix (square matrix) corresponding to a case that linear transform is performed on a row of $X_{MN} \otimes s_p$, and $L_{pN}$ is an equivalent linear transform matrix corresponding to a case that linear transform is performed on a column of $X_{MN} \otimes s_p$.

Step 703: Perform a Kronecker product operation on the symbol subjected to spectrum spreading and a second spectrum spreading code in the time-frequency domain, to obtain the symbol subjected to secondary spectrum spreading.

Optionally, a Kronecker product operation is performed on the symbol $L_M(X_{MN} \otimes s_p)L_{pN}$ subjected to spectrum spreading and $s'_q$ in the time-frequency domain, to obtain the symbol $(L_M(X_{MN} \otimes s_p)L_{pN}) \otimes s'_q$ subjected to secondary spectrum spreading.

**In** the spectrum spreading method provided in this embodiment of this application, spectrum spreading is performed on a modulation symbol mapped to a two-dimensional plane grid in a multi-carrier system row by row in a transform domain, and then spectrum spreading is performed on a symbol subjected to spectrum spreading column by column in a time-frequency domain, to implementation two-dimensional spectrum spreading in the multi-carrier system and increase a diversity gain of a communication system.

Description for the spectrum spreading manner 6: the spectrum spreading manner 6 based on the spectrum spreading manner 2 is used as an example, and it is assumed that the third spectrum spreading code is the same as the first spectrum spreading code: spectrum spreading is performed on the modulation symbol column by column based on the second spectrum spreading code in the transform domain, to obtain the third spectrum spreading symbol, and the third spectrum spreading symbol is transformed from the transform domain to the time-frequency domain, to obtain the symbol subjected to spectrum spreading. Further, spectrum spreading is performed on the symbol subjected to spectrum spreading row by row based on the third spectrum spreading code in the time-frequency domain, to obtain the symbol subjected to secondary spectrum spreading, where the third spectrum spreading code is a row vector.

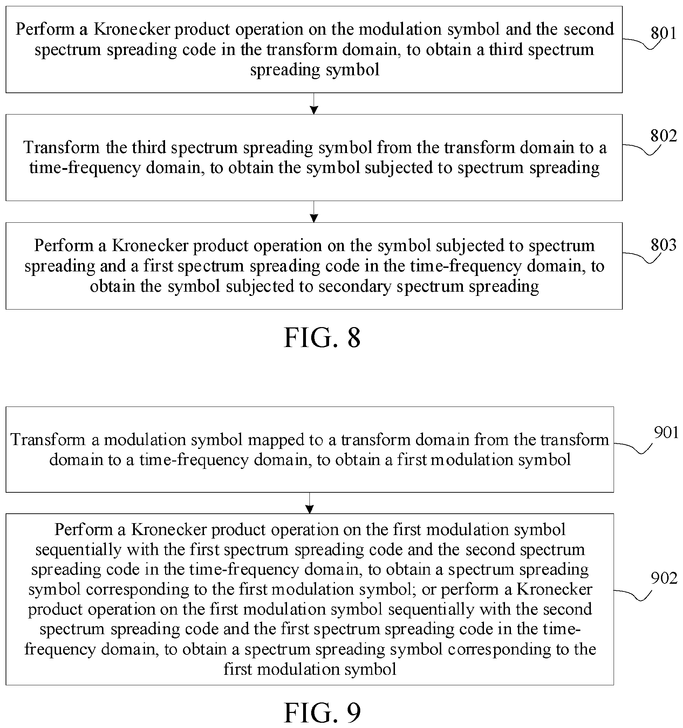

FIG. 8 is a seventh schematic flowchart of a spectrum spreading method according to an embodiment of this application. As shown in FIG. 8, the method includes the following steps:

Step 801: Perform a Kronecker product operation on the modulation symbol and the second spectrum spreading code in the transform domain, to obtain a third spectrum spreading symbol.

Optionally, it is assumed that a two-dimensional modulation symbol set is denoted as $X_{MN}$, where $M$ and $N$ respectively represent a row and a column of the two-dimensional modulation symbol set; and a first spectrum spreading code $s_p$ has a length of $p$, a second spectrum spreading code $s'_q$ has a length of $q$, and the second spectrum spreading code $s'_q$ is a transpose of a spectrum spreading code $s_q$.

Optionally, a Kronecker product operation is performed on $X_{MN}$ and $s'_q$ in the transform domain, to obtain a third spectrum spreading symbol $X_{MN} \otimes s'_q$, where $\otimes$ represents the Kronecker product operation.

Step 802: Transform the third spectrum spreading symbol from the transform domain to a time-frequency domain, to obtain the symbol subjected to spectrum spreading.

Optionally, the third spectrum spreading symbol $X_{MN} \otimes s'_q$ is transformed from the transform domain to the time-frequency domain, to obtain the symbol $L_{qM}(X_{MN} \otimes s'_q)L_N$ subjected to spectrum spreading, where $L_{qM}$ is an equivalent linear transform matrix corresponding to a case that linear transform is performed on a row of $X_{MN} \otimes s'_q$, and $L_N$ is an equivalent linear transform matrix corresponding to a case that linear transform is performed on a column of $X_{MN} \otimes s'_q$.

Step 803: Perform a Kronecker product operation on the symbol subjected to spectrum spreading and a first spectrum spreading code in the time-frequency domain, to obtain the symbol subjected to secondary spectrum spreading.

Optionally, a Kronecker product operation is performed on the symbol $L_{qM}(X_{MN} \otimes s'_q)L_N$ subjected to spectrum spreading and $s_p$ in the time-frequency domain, to obtain the symbol $(L_{qM}(X_{MN} \otimes s'_q)L_N) \otimes s_p$ subjected to secondary spectrum spreading.

In the spectrum spreading method provided in this embodiment of this application, spectrum spreading is performed on a modulation symbol mapped to a two-dimensional plane grid in a multi-carrier system column by column in a transform domain, and then spectrum spreading is performed on a symbol subjected to spectrum spreading row by row in a time-frequency domain, to implementation two-dimensional spectrum spreading in the multi-carrier system and increase a diversity gain of a communication system.

Description for the spectrum spreading manner 7: based on any one of the spectrum spreading manners 1 to 4, spectrum spreading is performed on the modulation symbol based on the target spectrum spreading code in the transform domain and the symbol subjected to spectrum spreading is obtained. Further, spectrum spreading is performed again on the symbol subjected to spectrum spreading row by row and column by column in the time-frequency domain, to obtain the symbol subjected to secondary spectrum spreading. For example, a Kronecker product operation is performed on the symbol subjected to spectrum spreading sequentially with the third spectrum spreading code and the fourth spectrum spreading code in the time-frequency domain, to obtain the symbol subjected to secondary spectrum spreading.

Description for the spectrum spreading manner 8: based on any one of the spectrum spreading manners 1 to 4, spectrum spreading is performed on the modulation symbol based on the target spectrum spreading code in the transform domain and the symbol subjected to spectrum spreading is obtained. Further, spectrum spreading is performed again on the symbol subjected to spectrum spreading column by column and row by row in the time-frequency domain, to obtain the symbol subjected to secondary spectrum spreading. For example, a Kronecker product operation is performed on the symbol subjected to spectrum spreading sequentially with the fourth spectrum spreading code and the third spectrum spreading code in the time-frequency domain, to obtain the symbol subjected to secondary spectrum spreading.

Description for the spectrum spreading manner 9: Compared with the spectrum spreading manners 1 to 8, in the spectrum spreading manner 9, spectrum spreading is not performed on the two-dimensional modulation symbol set in the transform domain; instead, the two-dimensional modulation symbol set is first transformed from the transform domain to the time-frequency domain to obtain a first modulation symbol, and then spectrum spreading is performed on the first modulation symbol in the time-frequency domain. Specifically:

A Kronecker product operation is performed on the first modulation symbol sequentially with the third spectrum spreading code and the fourth spectrum spreading code in the time-frequency domain, to obtain a spectrum spreading symbol corresponding to the first modulation symbol; or a Kronecker product operation is performed on the first modulation symbol sequentially with the fourth spectrum spreading code and the third spectrum spreading code in the time-frequency domain, to obtain a spectrum spreading symbol corresponding to the first modulation symbol, where the third spectrum spreading code is a row vector, and the fourth spectrum spreading code is a column vector.

FIG. 9 is an eighth schematic flowchart of a spectrum spreading method according to an embodiment of this application. In addition, it is assumed that a third spectrum spreading code is the same as a first spectrum spreading code and a fourth spectrum spreading code is the same as a second spectrum spreading code. As shown in FIG. 9, the method includes the following steps:

Step 901: Transform a modulation symbol mapped to a transform domain from the transform domain to a time-frequency domain, to obtain a first modulation symbol.

Optionally, it is assumed that a two-dimensional modulation symbol set is denoted as $X_{MN}$, where $M$ and $N$ respectively represent a row and a column of the two-dimensional modulation symbol set; and a first spectrum spreading code $s_p$ has a length of $p$, a second spectrum spreading code $s'_q$ has a length of $q$, and the second spectrum spreading code $s'_q$ is a transpose of a spectrum spreading code $s_q$.

Optionally, the two-dimensional modulation symbol set $X_{MN}$ is transformed from the transform domain to the time-frequency domain, to obtain the first modulation symbol $L_M X_{MN} L_N$, where $L_M$ is an equivalent linear transform matrix corresponding to a case that linear transform is performed on a row of $X_{MN}$, and $L_N$ is an equivalent linear transform matrix corresponding to a case that linear transform is performed on a column of $X_{MN}$.

For example, the transform domain is a delay Doppler domain. During transform from the delay Doppler domain to the time-frequency domain, $L_M$ is an inverse Fourier matrix $F_M^H$, and $L_N$ is a Fourier matrix $F_N$, where left-multiplying the matrix X by the inverse Fourier matrix is equivalent to performing inverse Fourier transform on a column of X, and right-multiplying the matrix X by the Fourier matrix is equivalent to performing Fourier transform on a row of X.

Step 902: Perform a Kronecker product operation on the first modulation symbol sequentially with the first spectrum spreading code and the second spectrum spreading code in the time-frequency domain, to obtain a spectrum spreading symbol corresponding to the first modulation symbol; or perform a Kronecker product operation on the first modulation symbol sequentially with the second spectrum spreading code and the first spectrum spreading code in the time-frequency domain, to obtain a spectrum spreading symbol corresponding to the first modulation symbol.

Optionally, in the time-frequency domain, a Kronecker product operation is first performed on the first modulation symbol $L_M X_{MN} L_N$ and the first spectrum spreading code $s_p$ to obtain $(L_M X_{MN} L_N) \otimes s_p$, and a Kronecker product operation is then performed on $(L_M X_{MN} L_N) \otimes s_p$ and the second spectrum spreading code $s'_q$, to obtain a spectrum spreading symbol $(L_M X_{MN} L_N) \otimes s_p \otimes s'_q$ corresponding to the first modulation symbol; or in the time-frequency domain, a Kronecker product operation is first performed on the first modulation symbol $L_M X_{MN} L_N$ and the second spectrum spreading code $s'_q$ to obtain $(L_M X_{MN} L_N) \otimes s'_q$, and a Kronecker product operation is then performed on $(L_M X_{MN} L_N) \otimes s'_q$ and the first spectrum spreading code $s_p$, to obtain $(L_M X_{MN} L_N) \otimes s'_q \otimes s_p$, where $(L_M X_{MN} L_N) \otimes s'_q \otimes s_p$ is obviously equivalent to a spectrum spreading symbol $(L_M X_{MN} L_N) \otimes s_p \otimes s'_q$ corresponding to the first modulation symbol.

In the spectrum spreading method provided in this embodiment of this application, a two-dimensional modulation symbol set is first transformed from a transform domain to a time-frequency domain to obtain a first modulation symbol, and a Kronecker product operation is performed on the first modulation symbol sequentially with a first spectrum spreading code and a second spectrum spreading code in the time-frequency domain, to obtain a spectrum spreading symbol corresponding to the first modulation symbol, so that a modulation symbol in a two-dimensional plane grid can be spread into a wider frequency band, and a diversity gain of the communication system can be increased.

The spectrum spreading method provided in this embodiment of this application may be used in a multi-layer transmission scenario for a same user in a single-user system, where multi-layer transmission is performed using orthogonality between spectrum spreading codes, and a diversity gain and a throughput are flexibly balanced according to a channel status. An implementation in which the spectrum spreading method provided in this embodiment of this application is used in a multi-layer transmission scenario for a same user in a single-user system is described herein:

It is assumed that there are a total of K layers of transmission, one group of original information bits $c^k[m]$ is transmitted by a kth layer, corresponds to a modulation symbol $x^k[n]$ of the kth layer after channel coding, and is denoted, after being mapped to a resource grid (that is, a two-dimensional plane grid) with a dimension of M*N, as a two-dimensional modulation symbol set $X_{MN}^k$ of the kth layer. The spectrum spreading solution for multi-layer transmission for a same user in a single-user system provided in this embodiment of this application includes: performing, based on target spectrum spreading codes corresponding to layers, spectrum spreading on modulation symbols that are mapped to the transform domain and that correspond to the layers in the transform domain in a case of single-user multi-layer transmission; and superimposing spectrum spreading results corresponding to the layers, to obtain the symbol subjected to spectrum spreading.

The spectrum spreading solution for multi-layer transmission is described as follows using the spectrum spreading manner 1 as an example:

It is assumed that in the two-dimensional modulation symbol set $X_{MN}^k$ of the kth layer, a first spectrum spreading code $s_p^k$ has a length of $p$, a second spectrum spreading code $s_q^{k'}$ has a length of q, and the second spectrum spreading code $s_q^{k'}$ is a transpose of a spectrum spreading code $s_q^k$.

First, a Kronecker product operation is performed on $X_{MN}^k$ and $s_p^k$ in the transform domain, to obtain a first spectrum spreading symbol $X_{MN}^k \otimes s_p^k$;

second, first spectrum spreading symbols $X_{MN}^k \otimes s_p^k$ corresponding to $X_{MN}^k$ of layers are superimposed in the transform domain, to obtain a superimposed symbol set $\sum_{k=1}^{K} X_{MN}^k \otimes s_p^k$, which is denoted as $X_{\bar{M}\bar{N}}$; and

then, the superimposed symbol set $X_{\bar{M}\bar{N}}$ is transformed from the transform domain to the time-frequency domain, to obtain the symbol $L_{\bar{M}} X_{\bar{M}\bar{N}} L_{\bar{N}}$ subjected to spectrum spreading, where $L_{\bar{M}}$ is an equivalent linear transform matrix (square matrix) corresponding to a case that linear transform is performed on a row of $X_{\bar{M}\bar{N}}$, and $L_{\bar{N}}$ is an equivalent linear transform matrix corresponding to a case that linear transform is performed on a column of $X_{\bar{M}\bar{N}}$. $L_{\bar{M}}$ and $L_{\bar{N}}$ are described as follows: It is assumed that linear transform is performed on a row vector or a column vector $X_m$ in $X_{MN}$ based on Formula (1), and $X_m$ has a length of $N$.

$$L(\mathbf{x}_m) : \hat{\mathbf{x}}_m[k] = \sum_{n=0}^{N-1} \mathbf{x}_m[n] * w_{nk}, k = 0, 1, ..., N \tag{1}$$

where $\mathcal{L}(\cdot)$ represents linear transform performed on a sequence, $\hat{x}[k]$ represents a kth element of the sequence $\hat{X}_m$ subjected to linear transform, $X_m[n]$ represents an nth element of $X_m$, and an element $w_{nk}$ represents a weighting coefficient.

For $X_{MN}$, if $X_m$ is a row vector of $X_{MN}$, $X_{MN}$ may be represented as Formula (2):

$$X_{MN} = [\mathbf{x}_1, \mathbf{x}_2, ..., \mathbf{x}_M]' \tag{2}$$

A linear multiplication relationship in Formula (1) is expressed in the form of a matrix, and a linear transform matrix $L_N$ is defined as shown in Formula (3):

$$L_N = \begin{bmatrix} w_{00} & w_{01} & w_{02} & \cdots & w_{0N} \\ w_{10} & w_{11} & w_{12} & \cdots & w_{1N} \\ w_{20} & w_{21} & w_{22} & \cdots & w_{2N} \\ \cdots & \cdots & \cdots & \cdots & \cdots \\ w_{N0} & w_{N1} & w_{N2} & \cdots & w_{NN} \end{bmatrix} \tag{3}$$

When $N = \tilde{N}$, $L_{\tilde{N}}$ is shown in Formula (4):

$$L_{\tilde{N}} = \begin{bmatrix} w_{00} & w_{01} & w_{02} & \cdots & w_{0\tilde{N}} \\ w_{10} & w_{11} & w_{12} & \cdots & w_{1\tilde{N}} \\ w_{20} & w_{21} & w_{22} & \cdots & w_{2\tilde{N}} \\ \cdots & \cdots & \cdots & \cdots & \cdots \\ w_{\tilde{N}0} & w_{\tilde{N}1} & w_{\tilde{N}2} & \cdots & w_{\tilde{N}\tilde{N}} \end{bmatrix} \tag{4}$$

When $N = \tilde{M}$, $L_{\tilde{M}}$ is shown in Formula (5):

$$L_{\tilde{M}} = \begin{bmatrix} w_{00} & w_{01} & w_{02} & \cdots & w_{0\tilde{M}} \\ w_{10} & w_{11} & w_{12} & \cdots & w_{1\tilde{M}} \\ w_{20} & w_{21} & w_{22} & \cdots & w_{2\tilde{M}} \\ \cdots & \cdots & \cdots & \cdots & \cdots \\ w_{\tilde{M}0} & w_{\tilde{M}1} & w_{\tilde{M}2} & \cdots & w_{\tilde{M}\tilde{M}} \end{bmatrix} \tag{5}$$

Based on the spectrum spreading solution for multi-layer transmission for a same user in a single-user system provided in this embodiment of this application, a balance between an increase in a diversity gain and an increase in a throughput for a transmission manner may be implemented according to identical or different $c^k[m]$ used by layers. Particularly, for mapping from $c^k[m]$ to $x^k[n]$, that is, a modulation and coding scheme (Modulation and coding scheme, MCS), different layers may use different MCSs.

When diversity transmission is performed, it is required that different layers have the same length $x^k[n]$, and contained information is consistent, that is, is all $c[m]$. For example, if $x^1[n]$ is Binary Phase Shift Keying (Binary Phase Shift Keying, BPSK) modulation of $c[m]$ using a code rate of 1/2, $x^2[n]$ is Quadrature Phase Shift Keying (Quadrature Phase Shift Keying, QPSK) modulation of $c[m]$ using a code rate of 1/4, so that it can be ensured that $x^1[n]$ and $x^2[n]$ have the same length.

When multi-stream transmission in pursuit of a high throughput is performed, it is required that different layers have the same length $x^k[n]$, but it is not required that contained information is consistent. Therefore, if different layers use different MCSs, amounts of information transmitted by the different layers may be inconsistent. For example, if $x^1[n]$ is BPSK modulation of $c^1[m]$ using a code rate of 1/2, $x^2[n]$ is QPSK modulation of $c^2[m']$ using a code rate of 1/2, and $m' = 2m$. In multi-layer transmission, the throughput depends on the quantity K of layers for transmission. Large K may be used when the channel is good, and vice versa. K may be dynamically adjusted according to channel state information (Channel State Information, CSI) obtained through measurement.

The spectrum spreading solution for multi-layer transmission is described as follows using the spectrum spreading manner 2 as an example:

It is assumed that in the two-dimensional modulation symbol set $X_{MN}^{k}$ of the kth layer, a first spectrum spreading code $s_{p}^{k}$ has a length of $p$, a second spectrum spreading code $s_{q}^{k'}$ has a length of q, and the second spectrum spreading code $s_{q}^{k'}$ is a transpose of a spectrum spreading code $s_{q}^{k}$.

First, a Kronecker product operation is performed on $X_{MN}^{k}$ and $s_{q}^{k'}$ in the transform domain, to obtain a third spectrum spreading symbol $X_{MN}^{k} \otimes s_{q}^{k'}$ ;

second, third spectrum spreading symbols $X_{MN}^{k} \otimes s_{q}^{k'}$ corresponding to $X_{MN}^{k}$ of layers are superimposed in the transform domain, to obtain a superimposed symbol set $\sum_{k=1}^{K} X_{MN}^{k} \otimes s_{q}^{k'}$ , which is denoted as $X_{\bar{M}\tilde{N}}$; and

then, the superimposed symbol set $X_{\bar{M}\tilde{N}}$ is transformed from the transform domain to the time-frequency domain, to obtain the symbol $L_{\bar{M}} X_{\bar{M}\tilde{N}} L_{\tilde{N}}$ subjected to spectrum spreading, where $L_{\bar{M}}$ is an equivalent linear transform matrix (square matrix) corresponding to a case that linear transform is performed on a row of $X_{\bar{M}\tilde{N}}$, and $L_{\tilde{N}}$ is an equivalent linear transform matrix corresponding to a case that linear transform is performed on a column of $X_{\bar{M}\tilde{N}}$.

The spectrum spreading solution for multi-layer transmission is described as follows using the spectrum spreading manners 3 and 4 as an example:

It is assumed that in the two-dimensional modulation symbol set $X_{MN}^{k}$ of the kth layer, a first spectrum spreading code $s_{p}^{k}$ has a length of $p$, a second spectrum spreading code $s_{q}^{k'}$ has a length of q, and the second spectrum spreading code $s_{q}^{k'}$ is a transpose of a spectrum spreading code $s_{q}^{k}$ .

First, a Kronecker product operation is performed on $X_{MN}^{k}$ sequentially with $s_{p}^{k}$ and $s_{q}^{k'}$ in the transform domain, to obtain a fifth spectrum spreading symbol $X_{MN}^{k} \otimes s_{p}^{k} \otimes s_{q}^{k'}$ ; or a Kronecker product operation is performed on $X_{MN}^{k}$ sequentially with $s_{q}^{k'}$ and $s_{p}^{k}$ in the transform domain, to obtain a fifth spectrum spreading symbol $X_{MN}^{k} \otimes s_{p}^{k} \otimes s_{q}^{k'}$ ;

second, fifth spectrum spreading symbols $X_{MN}^{k} \otimes s_{p}^{k} \otimes s_{q}^{k'}$ corresponding to $X_{MN}^{k}$ of layers are superimposed in the transform domain, to obtain a superimposed symbol set $\sum_{k=1}^{K} X_{MN}^{k} \otimes s_{p}^{k} \otimes s_{q}^{k'}$ , which is denoted as $X_{\bar{M}\tilde{N}}$; and

then, the superimposed symbol set $X_{\bar{M}\tilde{N}}$ is transformed from the transform domain to the time-frequency domain, to obtain the symbol $L_{\bar{M}} X_{\bar{M}\tilde{N}} L_{\tilde{N}}$ subjected to spectrum spreading, where $L_{\bar{M}}$ is an equivalent linear transform matrix (square matrix) corresponding to a case that linear transform is performed on a row of $X_{\bar{M}\tilde{N}}$, and $L_{\tilde{N}}$ is an equivalent linear transform matrix corresponding to a case that linear transform is performed on a column of $X_{\tilde{M}\tilde{N}}$.

The spectrum spreading solution for multi-layer transmission is described as follows using the spectrum spreading manner 5 as an example:

It is assumed that in the two-dimensional modulation symbol set $X_{MN}^{k}$ of the kth layer, a first spectrum spreading code $s_{p}^{k}$ has a length of $p$, a second spectrum spreading code $s_{q}^{k'}$ has a length of $q$, and the second spectrum spreading code $s_{q}^{k'}$ is a transpose of a spectrum spreading code $s_{q}^{k}$.

First, a Kronecker product operation is performed on $X_{MN}^{k}$ and $s_{p}^{k}$ in the **transform** domain, to obtain a first spectrum spreading symbol $X_{MN}^{k} \otimes s_{p}^{k}$ ;

second, first spectrum spreading symbols $X_{MN}^{k} \otimes s_{p}^{k}$ corresponding to $X_{MN}^{k}$ of layers are superimposed in the transform domain, to obtain a superimposed symbol set $\sum_{k=1}^{K} X_{MN}^{k} \otimes s_{p}^{k}$ , which is denoted as $X_{\tilde{M}\tilde{N}}$; and

then, the superimposed symbol set $X_{\tilde{M}\tilde{N}}$ is transformed from the transform domain to the time-frequency domain, to obtain the symbol $L_{\tilde{M}} X_{\tilde{M}\tilde{N}} L_{\tilde{N}}$ subjected to spectrum spreading, where $L_{\tilde{M}}$ is an equivalent linear transform matrix (square matrix) corresponding to a case that linear transform is performed on a row of $X_{\tilde{M}\tilde{N}}$, and $L_{\tilde{N}}$ is an equivalent linear transform matrix corresponding to a case that linear transform is performed on a column of $X_{\tilde{M}\tilde{N}}$.

Then, a Kronecker product operation is performed on the symbol $L_{\tilde{M}} X_{\tilde{M}\tilde{N}} L_{\tilde{N}}$ subjected to spectrum spreading and $s_{q}^{k'}$ in the time-frequency domain, to obtain the symbol $L_{\tilde{M}} X_{\tilde{M}\tilde{N}} L_{\tilde{N}} \otimes s_{q}^{k'}$ subjected to secondary spectrum spreading.

The spectrum spreading solution for multi-layer transmission is described as follows using the spectrum spreading manner 6 as an example:

It is assumed that in the two-dimensional modulation symbol set $X_{MN}^{k}$ of the kth layer, a first spectrum spreading code $s_{p}^{k}$ has a length of $p$, a second spectrum spreading code $s_{q}^{k'}$ has a length of $q$, and the second spectrum spreading code $s_{q}^{k'}$ is a transpose of a spectrum spreading code $s_{q}^{k}$.

First, a Kronecker product operation is performed on $X_{MN}^{k}$ and $s_{q}^{k'}$ in the transform domain, to obtain a third spectrum spreading symbol $X_{MN}^{k} \otimes s_{q}^{k'}$ ;

second, third spectrum spreading symbols $X_{MN}^{k} \otimes s_{q}^{k'}$ corresponding to $X_{MN}^{k}$ of layers are superimposed in the transform domain, to obtain a superimposed symbol set $\sum_{k=1}^{K} X_{MN}^{k} \otimes s_{q}^{k'}$ , which is denoted as $X_{\tilde{M}\tilde{N}}$; and

then, the superimposed symbol set $X_{\tilde{M}\tilde{N}}$ is transformed from the transform domain to the time-frequency domain, to obtain the symbol $L_{\tilde{M}} X_{\tilde{M}\tilde{N}} L_{\tilde{N}}$ subjected to spectrum spreading, where $L_{\tilde{M}}$ is an equivalent linear transform matrix (square matrix) corresponding to a case that linear transform is performed on a row of $X_{\tilde{M}\tilde{N}}$, and $L_{\tilde{N}}$ is an equivalent linear transform matrix corresponding to a case that linear transform is performed on a column of $X_{\tilde{M}\tilde{N}}$.

Then, a Kronecker product operation is performed on the symbol $L_{\tilde{M}} X_{\tilde{M}\tilde{N}} L_{\tilde{N}}$ subjected to spectrum spreading and $s_{p}^{k}$ in the time-frequency domain, to obtain the symbol $L_{\tilde{M}} X_{\tilde{M}\tilde{N}} L_{\tilde{N}} \otimes s_{p}^{k}$ subjected to secondary spectrum spreading.

The spectrum spreading manner 8 is used as an example:

It is assumed that in the two-dimensional modulation symbol set $X_{MN}^{k}$ of the kth layer, a first spectrum spreading code $s_{p}^{k}$ has a length of $p$, a second spectrum spreading code $s_{q}^{k'}$ has a length of $q$, and the second spectrum spreading code $s_q^{k'}$ is a transpose of a spectrum spreading code $s_q^k$.

First, $X_{MN}^k$ of layers are superimposed in the transform domain, to obtain a superimposed symbol set

$$\sum_{k=1}^{K} X_{MN}^k$$ , which is denoted as $X_{\tilde{M}\tilde{N}}$; and

second, the superimposed symbol set $X_{\tilde{M}\tilde{N}}$ is transformed from the transform domain to the time-frequency domain, to obtain the first modulation symbol $L_{\tilde{M}}X_{\tilde{M}\tilde{N}}L_{\tilde{N}}$, where $L_{\tilde{M}}$ is an equivalent linear transform matrix (square matrix) corresponding to a case that linear transform is performed on a row of $X_{\tilde{M}\tilde{N}}$, and $L_{\tilde{N}}$ is an equivalent linear transform matrix corresponding to a case that linear transform is performed on a column of $X_{\tilde{M}\tilde{N}}$.

Then, a Kronecker product operation is performed on the first modulation symbol $L_{\tilde{M}}X_{\tilde{M}\tilde{N}}L_{\tilde{N}}$ with $s_p^k$ and $s_q^{k'}$ in the time-frequency domain, to obtain a spectrum spreading symbol $L_{\tilde{M}}X_{\tilde{M}\tilde{N}}L_{\tilde{N}} \otimes s_p^k \otimes s_q^{k'}$ corresponding to the first modulation symbol.

The spectrum spreading method provided in this embodiment of this application may be further used in a scenario of a multi-user system, and can provide effective multi-user code division multiplexing in the transform domain. The spectrum spreading solution for a multi-user system provided in this embodiment of this application includes: performing, based on target spectrum spreading codes corresponding to users, spectrum spreading on modulation symbols that are mapped to the transform domain and that correspond to the users in the transform domain in a case of multi-user transmission; and superimposing spectrum spreading results corresponding to the users, to obtain the symbol subjected to spectrum spreading.

For example, the spectrum spreading manner 3 is used as an example. The spectrum spreading solution for a multi-user system provided in this embodiment of this application is specifically:

It is assumed that a total of K users perform code division multiplexing and a two-dimensional modulation symbol set of a user k mapped to a two-dimensional plane grid is $X_{MN}^k$, where a first spectrum spreading code $s_p^k$ has a length of p, a second spectrum spreading code $s_q^{k'}$ has a length of q, and the second spectrum spreading code $s_q^{k'}$ is a transpose of a spectrum spreading code $s_p^k$.

First, using the user k as an example, for the user k, a Kronecker product operation is performed on $X_{MN}^k$ with $s_p^k$ and $s_q^{k'}$ in the transform domain, to obtain a fifth spectrum spreading symbol $X_{MN}^k \otimes s_p^k \otimes s_q^{k'}$;

second, fifth spectrum spreading symbols $X_{MN}^k \otimes s_p^k \otimes s_q^{k'}$ corresponding to $X_{MN}^k$ of the users are superimposed in the transform domain, to obtain a superimposed symbol set $\sum_{k=1}^{K} X_{MN}^k \otimes s_p^k \otimes s_q^{k'}$ , which is denoted as $X_{\tilde{M}\tilde{N}}$; and

then, the superimposed symbol set $X_{\tilde{M}\tilde{N}}$ is transformed from the transform domain to the time-frequency domain, to obtain the symbol $L_{\tilde{M}}X_{\tilde{M}\tilde{N}}L_{\tilde{N}}$ subjected to spectrum spreading, where $L_{\tilde{M}}$ is an equivalent linear transform matrix (square matrix) corresponding to a case that linear transform is performed on a row of $X_{\tilde{M}\tilde{N}}$, and $L_{\tilde{N}}$ is an equivalent linear transform matrix corresponding to a case that linear transform is performed on a column of $X_{\tilde{M}\tilde{N}}$.

In the embodiments of this application, a spectrum spreading apparatus provided in the embodiments of this application is described using an example in which a spectrum spreading apparatus executes the spectrum spreading method.

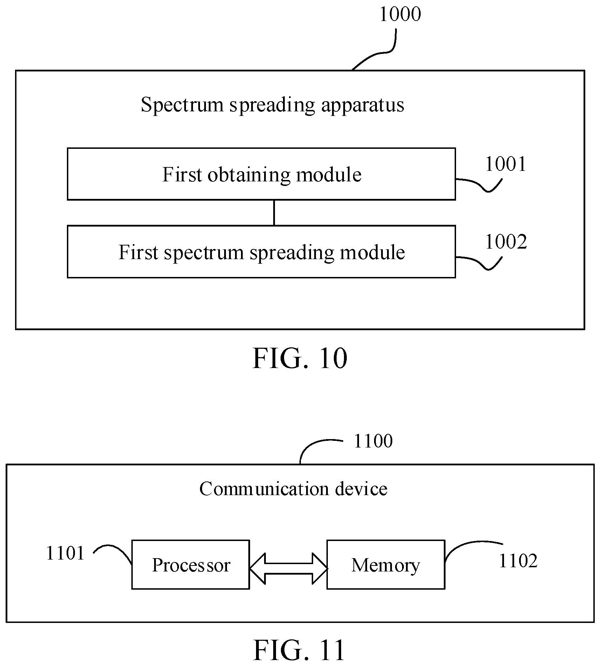

Embodiments of this application provide a spectrum spreading apparatus. FIG. 10 is a schematic structural diagram of a spectrum spreading apparatus according to an embodiment of this application. As shown in FIG. 10, the spectrum spreading apparatus 1000 includes:

a first obtaining module 1001, configured to obtain a modulation symbol mapped to a transform domain; and
a first spectrum spreading module 1002, configured to perform, based on a target spectrum spreading code, spectrum spreading on the modulation symbol in the transform domain, to obtain a symbol subjected to spectrum spreading.

In the spectrum spreading apparatus provided in this embodiment of this application, a plurality of modulation symbols in a multi-carrier system are mapped to a transform domain, and spectrum spreading is performed on the modulation symbols in the transform domain based on a target spectrum spreading code, thereby spreading the modulation symbols in the multi-carrier system into a wider frequency band, to implement signal spectrum spreading in a scenario of the multi-carrier system of a communication system, so that a diversity gain of the communication system can be increased.

The spectrum spreading apparatus in this embodiment of this application may be an apparatus, an apparatus with an operating system, or a communication device, or may be a component, an integrated circuit, or a chip in communication. The apparatus or communication device may include but is not limited to the foregoing listed types of the terminal 11 or the foregoing listed types of the network-side device 12, and is not specifically limited in this embodiment of this application.

According to the invention, the first spectrum spreading module is specifically configured to perform any one of the following:

performing, based on the target spectrum spreading code, spectrum spreading on the modulation symbol row by row in the transform domain, to obtain the symbol subjected to spectrum spreading;
performing, based on the target spectrum spreading code, spectrum spreading on the modulation symbol column by column in the transform domain, to obtain the symbol subjected to spectrum spreading;
performing, based on the target spectrum spreading code, spectrum spreading on the modulation symbol sequentially row by row and column by column in the transform domain, to obtain the symbol subjected to spectrum spreading; and
performing, based on the target spectrum spreading code, spectrum spreading on the modulation symbol sequentially column by column and row by row in the transform domain, to obtain the symbol subjected to spectrum spreading.

Optionally, the first spectrum spreading module is specifically configured to: when the target spectrum spreading code includes a first spectrum spreading code and the first spectrum spreading code is a row vector, perform a Kronecker product operation on the modulation symbol and the first spectrum spreading code in the transform domain, to obtain a first spectrum spreading symbol; and
transform the first spectrum spreading symbol from the transform domain to a time-frequency domain, to obtain the symbol subjected to spectrum spreading.

Optionally, the first spectrum spreading module is specifically configured to: when the target spectrum spreading code includes a second spectrum spreading code and the second spectrum spreading code is a column vector, perform a Kronecker product operation on the modulation symbol and the second spectrum spreading code in the transform domain, to obtain a third spectrum spreading symbol; and
transform the third spectrum spreading symbol from the transform domain to a time-frequency domain, to obtain the symbol subjected to spectrum spreading.

Optionally, the first spectrum spreading module is specifically configured to: when the target spectrum spreading code includes a first spectrum spreading code and a second spectrum spreading code, the first spectrum spreading code is a row vector, and the second spectrum spreading code is a column vector, perform a Kronecker product operation on the modulation symbol and the first spectrum spreading code in the transform domain, to obtain a first spectrum spreading symbol;

perform a Kronecker product operation on the first spectrum spreading symbol and the second spectrum spreading code in the transform domain, to obtain a fifth spectrum spreading symbol; and
transform the fifth spectrum spreading symbol from the transform domain to a time-frequency domain, to obtain the symbol subjected to spectrum spreading.

Optionally, the first spectrum spreading module is specifically configured to: when the target spectrum spreading code includes a first spectrum spreading code and a second spectrum spreading code, the first spectrum spreading code is a row vector, and the second spectrum spreading code is a column vector, perform a Kronecker product operation on the modulation symbol and the second spectrum spreading code in the transform domain, to obtain a third spectrum spreading symbol;

perform a Kronecker product operation on the third spectrum spreading symbol and the first spectrum spreading code in the transform domain, to obtain a fifth spectrum spreading symbol; and
transform the fifth spectrum spreading symbol from the transform domain to a time-frequency domain, to obtain the symbol subjected to spectrum spreading.

Optionally, the method further includes: a second spectrum spreading module, configured to perform, in the time-frequency domain, secondary spectrum spreading on the symbol subjected to spectrum spreading, to obtain a symbol subjected to secondary spectrum spreading.

Optionally, the second spectrum spreading module is specifically configured to: perform, in the time-frequency domain, spectrum spreading on the symbol subjected to spectrum spreading row by row and/or column by column, to obtain the symbol subjected to secondary spectrum spreading.

Optionally, the second spectrum spreading module is specifically configured to perform any one of the following:

performing a Kronecker product operation on the symbol subjected to spectrum spreading and a third spectrum spreading code in the time-frequency domain, to obtain the symbol subjected to secondary spectrum spreading, where the third spectrum spreading code is a row vector;

performing a Kronecker product operation on the symbol subjected to spectrum spreading and a fourth spectrum spreading code in the time-frequency domain, to obtain the symbol subjected to secondary spectrum spreading, where the fourth spectrum spreading code is a column vector;

performing a Kronecker product operation on the symbol subjected to spectrum spreading sequentially with the third spectrum spreading code and the fourth spectrum spreading code in the time-frequency domain, to obtain the symbol subjected to secondary spectrum spreading; and

performing a Kronecker product operation on the symbol subjected to spectrum spreading sequentially with the fourth spectrum spreading code and the third spectrum spreading code in the time-frequency domain, to obtain the symbol subjected to secondary spectrum spreading.

Optionally, the first spectrum spreading module is specifically configured to: perform, based on target spectrum spreading codes corresponding to layers, spectrum spreading on modulation symbols corresponding to the layers in the transform domain in a case of single-user multi-layer transmission; and

superimpose spectrum spreading results corresponding to the layers, to obtain the symbol subjected to spectrum spreading.

Optionally, the first spectrum spreading module is specifically configured to: perform, based on target spectrum spreading codes corresponding to users, spectrum spreading on modulation symbols corresponding to the users in the transform domain in a case of multi-user transmission; and

superimpose spectrum spreading results corresponding to the users, to obtain the symbol subjected to spectrum spreading.

Optionally, the apparatus further includes:

a second obtaining module, configured to obtain a plurality of spectrum spreading codes; and

an interleaving module, configured to interleave the plurality of spectrum spreading codes, to obtain the target spectrum spreading code.

The spectrum spreading apparatus provided in this embodiment of this application can implement each process implemented in the method embodiments of FIG. 1 to FIG. 9, and achieve the same technical effect. To avoid repetition, details are not described herein again.

Optionally, as shown in FIG. 11, an embodiment of this application further provides a communication device 1100, including a processor 1101, a memory 1102, and a program or an instruction stored on the memory 1102 and runnable on the processor 1101. The communication device 1100 may be a terminal or a network-side device. The program or instruction is executable by the processor 1101 to implement the processes of the embodiments of the foregoing spectrum spreading method, and the same technical effects can be achieved, which will not be described in detail herein again to avoid repetition.

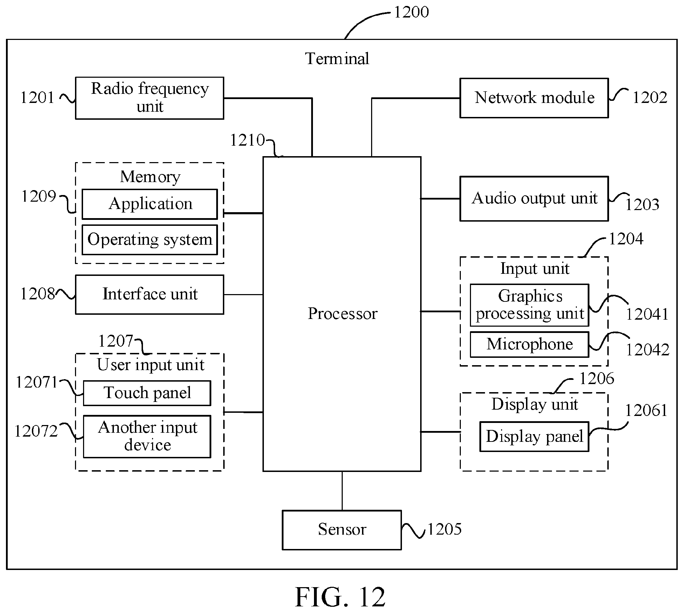

An embodiment of this application further provides a terminal, including: a processor and a communication interface. The communication interface is configured to obtain a modulation symbol mapped to a transform domain; and The processor is configured to perform, based on a target spectrum spreading code, spectrum spreading on the modulation symbol in the transform domain, to obtain a symbol subjected to spectrum spreading. The terminal embodiment corresponds to the foregoing method embodiment, and each implementation process and implementation of the foregoing method embodiment is applicable to the terminal embodiment, and can achieve the same technical effect. Specifically, FIG. 12 is a schematic diagram of a hardware structure of a terminal according to an embodiment of this application.

The terminal 1200 includes, but is not limited to at least some components of a radio frequency unit 1201, a network module 1202, an audio output unit 1203, an input unit 1204, a sensor 1205, a display unit 1206, a user input unit 1207, an interface unit 1208, a memory 1209, a processor 1210, and the like.

A person skilled in the art may understand that, the terminal 1200 may further include a power supply (such as a battery) for supplying power to the components. The power supply may be logically connected to the processor 1210 by using a power management system, thereby implementing functions such as charging, discharging, and power consumption management by using the power management system. A terminal structure shown in FIG. 12 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1204 may include a graphics processing unit (Graphics Processing Unit, GPU) 12041 and a microphone 12042. The graphics processing unit 12041 performs processing on image data of a static picture or a video that is obtained by an image capture apparatus (for example, a camera) in a video capture mode or an image capture mode. The display unit 1206 may include a display panel 12061, for example, a display panel 12061 configured in a form such as a liquid crystal display or an organic light-emitting diode. The user input unit 1207 includes a touch panel 12071 and another input device 12072. The touch panel 12071 is also referred to as a touchscreen The touch panel 12071 may include two parts: a touch detection apparatus and a touch controller. The another input device 12072 may include, but not limited to, a physical keyboard, a functional key (such as a volume control key or a switch key), a track ball, a mouse, and a joystick, which are not described herein in detail.

In this embodiment of this application, the radio frequency unit 1201 receives downlink data from a network-side device, and then delivers the downlink data to the processor 1210 for processing; and in addition, sends uplink data to the network-side device. Generally, the radio frequency unit 1201 includes, but is not limited to, an antenna, at least one amplifier, a transceiver, a coupler, a low noise amplifier, a duplexer, and the like.

The memory 1209 may be configured to store a software program or instruction and various data. The memory 1209 may mainly include a program or instruction storage area and a data storage area. The program or instruction storage region may store an operating system, an application or instruction required by at least one function (for example, a voice playing function or an image playing function), and the like. In addition, the memory 1209 may include a high-speed random access memory, or may further include a non-volatile memory, or the like. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the nonvolatile memory is at least one magnetic disk storage device, a flash memory device, or other non-volatile solid-state storage devices.

The processor 1210 may include one or more processing units. Optionally, the processor 1210 may integrate an application processor and a modem processor. The application processor mainly processes an operating system, a user interface, an application or instruction, and the like. The modem processor mainly processes wireless communication, and is, for example, a baseband processor. It may be understood that, the foregoing modem processor may not be integrated into the processor 1210.

The processor 1210 is configured to: obtain a modulation symbol mapped to a transform domain; and perform, based on a target spectrum spreading code, spectrum spreading on the modulation symbol in the transform domain, to obtain a symbol subjected to spectrum spreading.

In the terminal provided in this embodiment of this application, a plurality of modulation symbols in a multi-carrier system are mapped to a transform domain, and spectrum spreading is performed on the modulation symbols in the transform domain based on a target spectrum spreading code, thereby spreading the modulation symbols in the multi-carrier system into a wider frequency band, to implement signal spectrum spreading in a scenario of the multi-carrier system of a communication system, so that a diversity gain of the communication system can be increased.

According to the invention, the processor 1210 is configured to perform any one of the following:

performing, based on the target spectrum spreading code, spectrum spreading on the modulation symbol row by row in the transform domain, to obtain the symbol subjected to spectrum spreading;
performing, based on the target spectrum spreading code, spectrum spreading on the modulation symbol column by column in the transform domain, to obtain the symbol subjected to spectrum spreading;
performing, based on the target spectrum spreading code, spectrum spreading on the modulation symbol sequentially row by row and column by column in the transform domain, to obtain the symbol subjected to spectrum spreading; and
performing, based on the target spectrum spreading code, spectrum spreading on the modulation symbol sequentially column by column and row by row in the transform domain, to obtain the symbol subjected to spectrum spreading.

Optionally, the processor 1210 is configured to: when the target spectrum spreading code includes a first spectrum spreading code and the first spectrum spreading code is a row vector, perform a Kronecker product operation on the modulation symbol and the first spectrum spreading code in the transform domain, to obtain a first spectrum spreading symbol; and
transform the first spectrum spreading symbol from the transform domain to a time-frequency domain, to obtain the symbol subjected to spectrum spreading.

Optionally, the processor 1210 is configured to: when the target spectrum spreading code includes a second spectrum spreading code and the second spectrum spreading code is a column vector, perform a Kronecker product operation on the modulation symbol and the second spectrum spreading code in the transform domain, to obtain a third spectrum spreading symbol; and

transform the third spectrum spreading symbol from the transform domain to a time-frequency domain, to obtain the symbol subjected to spectrum spreading.

Optionally, the processor 1210 is configured to: when the target spectrum spreading code includes a first spectrum spreading code and a second spectrum spreading code, the first spectrum spreading code is a row vector, and the second spectrum spreading code is a column vector, perform a Kronecker product operation on the modulation symbol and the first spectrum spreading code in the transform domain, to obtain a first spectrum spreading symbol;

perform a Kronecker product operation on the first spectrum spreading symbol and the second spectrum spreading code in the transform domain, to obtain a fifth spectrum spreading symbol; and
transform the fifth spectrum spreading symbol from the transform domain to a time-frequency domain, to obtain the symbol subjected to spectrum spreading.

Optionally, the processor 1210 is configured to: when the target spectrum spreading code includes a first spectrum spreading code and a second spectrum spreading code, the first spectrum spreading code is a row vector, and the second spectrum spreading code is a column vector, perform a Kronecker product operation on the modulation symbol and the second spectrum spreading code in the transform domain, to obtain a third spectrum spreading symbol;

perform a Kronecker product operation on the third spectrum spreading symbol and the first spectrum spreading code in the transform domain, to obtain a fifth spectrum spreading symbol; and
transform the fifth spectrum spreading symbol from the transform domain to a time-frequency domain, to obtain the symbol subjected to spectrum spreading.

Optionally, the processor 1210 is configured to perform, in the time-frequency domain, secondary spectrum spreading on the symbol subjected to spectrum spreading, to obtain a symbol subjected to secondary spectrum spreading.

Optionally, the processor 1210 is configured to perform, in the time-frequency domain, spectrum spreading on the symbol subjected to spectrum spreading row by row and/or column by column, to obtain the symbol subjected to secondary spectrum spreading.

Optionally, the processor 1210 is configured to perform any one of the following:

performing a Kronecker product operation on the symbol subjected to spectrum spreading and a third spectrum spreading code in the time-frequency domain, to obtain the symbol subjected to secondary spectrum spreading, where the third spectrum spreading code is a row vector;
performing a Kronecker product operation on the symbol subjected to spectrum spreading and a fourth spectrum spreading code in the time-frequency domain, to obtain the symbol subjected to secondary spectrum spreading, where the fourth spectrum spreading code is a column vector;
performing a Kronecker product operation on the symbol subjected to spectrum spreading sequentially with the third spectrum spreading code and the fourth spectrum spreading code in the time-frequency domain, to obtain the symbol subjected to secondary spectrum spreading; and
performing a Kronecker product operation on the symbol subjected to spectrum spreading sequentially with the fourth spectrum spreading code and the third spectrum spreading code in the time-frequency domain, to obtain the symbol subjected to secondary spectrum spreading.

Optionally, the processor 1210 is configured to: perform, based on target spectrum spreading codes corresponding to layers, spectrum spreading on modulation symbols corresponding to the layers in the transform domain in a case of single-user multi-layer transmission; and

superimpose spectrum spreading results corresponding to the layers, to obtain the symbol subjected to spectrum spreading.

Optionally, the processor 1210 is configured to: perform, based on target spectrum spreading codes corresponding to users, spectrum spreading on modulation symbols corresponding to the users in the transform domain in a case of multi-user transmission; and

superimpose spectrum spreading results corresponding to the users, to obtain the symbol subjected to spectrum spreading.

Optionally, the processor 1210 is configured to: obtain a plurality of spectrum spreading codes; and interleave the plurality of spectrum spreading codes, to obtain the target spectrum spreading code.

Optionally, types of the transform domain include any one of the following types: a delay Doppler domain, a delay angle domain, and a delay sequence domain.

An embodiment of this application further provides a network-side device, including: a processor and a communication interface. The communication interface is configured to obtain a modulation symbol mapped to a transform domain; and the processor is configured to perform, based on a target spectrum spreading code, spectrum spreading on the modulation symbol in the transform domain, to obtain a symbol subjected to spectrum spreading. The network-side device embodiment corresponds to the foregoing method embodiment, and each implementation process and implementation of the foregoing method embodiment is applicable to the network-side device embodiment, and can achieve the same technical effect.

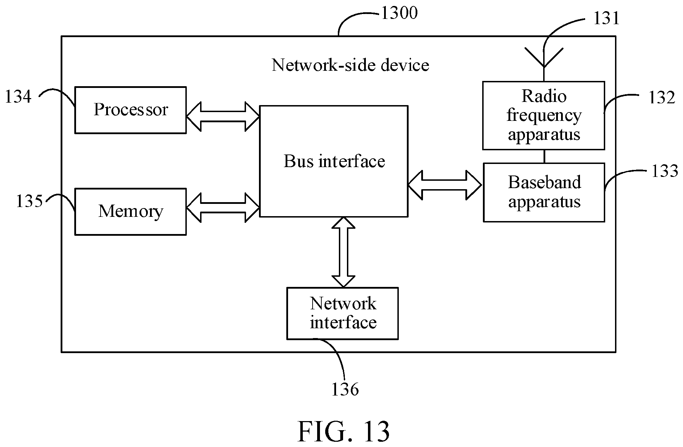

Specifically, an embodiment of this application further provides a network-side device. As shown in FIG. 13, the network device 1300 includes: an antenna 131, a radio frequency apparatus 132, and a baseband apparatus 133. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes information to be sent, and sends the information to the radio frequency apparatus 132. The radio frequency apparatus 132 processes the received information and sends the information by using the antenna 131.

The method performed by the network-side device in the foregoing embodiments may be implemented in the baseband apparatus 133. The baseband apparatus 133 includes a processor 134 and a memory 135.

The baseband apparatus 133 may include, for example, at least one baseband plate. A plurality of chips are disposed on the baseband plate. As shown in FIG. 13, one of the plurality of chips is, for example, the processor 134, and is connected to the memory 135, to invoke a program in the memory 135 to perform operations of the network device in the foregoing method embodiments.

The baseband apparatus 133 may further include a network interface 136, configured to exchange information with the radio frequency apparatus 132. The interface is, for example, a common public radio interface (common public radio interface, CPRI).

Specifically, the network-side device in this embodiment of the present invention further includes: an instruction or a program stored on the memory 135 and runnable on the processor 134. The processor 134 invokes the instruction or program in the memory 135 to perform the method performed by the modules shown in FIG. 10, and achieve the same technical effect. To avoid repetition, details are not described herein again.

An embodiment of this application further provides a readable storage medium. The readable storage medium stores a program or an instruction. The program or instruction is executable by a processor to implement the processes of the embodiments of the foregoing spectrum spreading method, and the same technical effects can be achieved, which will not be described in detail herein again to avoid repetition.

The processor is a processor in the communication device described in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

An embodiment of this application further provides a chip. The chip includes a processor and a communication interface. The communication interface is coupled to the processor. The processor is configured to run a program or instructions to implement all embodiments of the spectrum spreading method described above, and the same technical effects can be achieved, which will not be described in detail herein again to avoid repetition.

It should be noted that, the chip mentioned in the embodiments of this application may also be referred to as a system-level chip, a system chip, a chip system, a system on chip, or the like.

An embodiment of this application further provides a computer program/program product. The computer program/program product is stored in a non-transient storage medium. The computer program/program product is executable by at least one processor to implement the processes of the embodiments of the foregoing spectrum spreading method, and the same technical effects can be achieved, which will not be described in detail herein again to avoid repetition.

It should be noted that the terms "include", "include", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the range of the method and apparatus in the implementations of this application is not limited to performing functions in the shown or discussed order, and may further include performing functions in a basically simultaneous manner or in reverse order according to the involved functions. For example, the described method may be performed in an order different from the described order, and steps may be further added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions of this application essentially or the part contributing to the conventional technology may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the protection scope of the claims.

**Claims**

1. A spectrum spreading method, comprising:

obtaining (201) a modulation symbol mapped to a transform domain, wherein the modulation symbol mapped to the transform domain is represented using a two-dimensional modulation symbol set, the transform domain refers to any domain in which the modulation symbol is represented by the two-dimensional modulation symbol set; and

performing (202), based on a target spectrum spreading code, spectrum spreading on the modulation symbol in the transform domain, to obtain a symbol subjected to spectrum spreading;

wherein the performing (202), based on a target spectrum spreading code, spectrum spreading on the modulation symbol in the transform domain, to obtain a symbol subjected to spectrum spreading comprises any one of the following:

performing, based on the target spectrum spreading code, spectrum spreading on the modulation symbol row by row in the transform domain, to obtain the symbol subjected to spectrum spreading;

performing, based on the target spectrum spreading code, spectrum spreading on the modulation symbol column by column in the transform domain, to obtain the symbol subjected to spectrum spreading;

performing, based on the target spectrum spreading code, spectrum spreading on the modulation symbol sequentially row by row and column by column in the transform domain, to obtain the symbol subjected to spectrum spreading; and

performing, based on the target spectrum spreading code, spectrum spreading on the modulation symbol sequentially column by column and row by row in the transform domain, to obtain the symbol subjected to spectrum spreading;

wherein when the target spectrum spreading code comprises a first spectrum spreading code and the first spectrum spreading code is a row vector, the performing, based on the target spectrum spreading code, spectrum spreading on the modulation symbol row by row in the transform domain, to obtain the symbol subjected to spectrum spreading comprises:

performing (401) a Kronecker product operation on the modulation symbol and the first spectrum spreading code in the transform domain, to obtain a first spectrum spreading symbol; and

transforming (402) the first spectrum spreading symbol from the transform domain to a time-frequency domain, to obtain the symbol subjected to spectrum spreading;

or,

wherein when the target spectrum spreading code comprises a second spectrum spreading code and the second spectrum spreading code is a column vector, the performing, based on the target spectrum spreading code, spectrum spreading on the modulation symbol column by column in the transform domain, to obtain the symbol subjected to spectrum spreading comprises:

performing (501) a Kronecker product operation on the modulation symbol and the second spectrum spreading code in the transform domain, to obtain a third spectrum spreading symbol; and

transforming (502) the third spectrum spreading symbol from the transform domain to a time-frequency domain, to obtain the symbol subjected to spectrum spreading;

or,

wherein when the target spectrum spreading code comprises a first spectrum spreading code and a second spectrum spreading code, the first spectrum spreading code is a row vector, and the second spectrum spreading code is a column vector, the performing, based on the target spectrum spreading code, spectrum spreading on the modulation symbol sequentially row by row and column by column in the transform domain, to obtain the symbol subjected to spectrum spreading comprises:

> performing (601) a Kronecker product operation on the modulation symbol and the first spectrum spreading code in the transform domain, to obtain a first spectrum spreading symbol;
> performing a Kronecker product operation on the first spectrum spreading symbol and the second spectrum spreading code in the transform domain, to obtain a fifth spectrum spreading symbol; and
> transforming (602) the fifth spectrum spreading symbol from the transform domain to a time-frequency domain, to obtain the symbol subjected to spectrum spreading;
> or,
> wherein when the target spectrum spreading code comprises a first spectrum spreading code and a second spectrum spreading code, the first spectrum spreading code is a row vector, and the second spectrum spreading code is a column vector, the performing, based on the target spectrum spreading code, spectrum spreading on the modulation symbol sequentially column by column and row by row in the transform domain, to obtain the symbol subjected to spectrum spreading comprises:

>> performing (801) a Kronecker product operation on the modulation symbol and the second spectrum spreading code in the transform domain, to obtain a third spectrum spreading symbol;
>> performing a Kronecker product operation on the third spectrum spreading symbol and the first spectrum spreading code in the transform domain, to obtain a fifth spectrum spreading symbol; and
>> transforming (802) the fifth spectrum spreading symbol from the transform domain to a time-frequency domain, to obtain the symbol subjected to spectrum spreading.

2. The spectrum spreading method according to claim 1, wherein after the performing (202), based on a target spectrum spreading code, spectrum spreading on the modulation symbol in the transform domain, to obtain a symbol subjected to spectrum spreading, the spectrum spreading method further comprises:
performing (303), in the time-frequency domain, secondary spectrum spreading on the symbol subjected to spectrum spreading, to obtain a symbol subjected to secondary spectrum spreading.

3. The spectrum spreading method according to claim 2, wherein the performing (303), in the time-frequency domain, secondary spectrum spreading on the symbol subjected to spectrum spreading, to obtain a symbol subjected to secondary spectrum spreading comprises:
performing, in the time-frequency domain, spectrum spreading on the symbol subjected to spectrum spreading row by row and/or column by column, to obtain the symbol subjected to secondary spectrum spreading.

4. The spectrum spreading method according to claim 3, wherein the performing, in the time-frequency domain, spectrum spreading on the symbol subjected to spectrum spreading row by row and/or column by column, to obtain the symbol subjected to secondary spectrum spreading comprises any one of the following:

> performing a Kronecker product operation on the symbol subjected to spectrum spreading and a third spectrum spreading code in the time-frequency domain, to obtain the symbol subjected to secondary spectrum spreading, wherein the third spectrum spreading code is a row vector;
> performing a Kronecker product operation on the symbol subjected to spectrum spreading and a fourth spectrum spreading code in the time-frequency domain, to obtain the symbol subjected to secondary spectrum spreading, wherein the fourth spectrum spreading code is a column vector;
> performing a Kronecker product operation on the symbol subjected to spectrum spreading sequentially with the third spectrum spreading code and the fourth spectrum spreading code in the time-frequency domain, to obtain the symbol subjected to secondary spectrum spreading; and
> performing a Kronecker product operation on the symbol subjected to spectrum spreading sequentially with the fourth spectrum spreading code and the third spectrum spreading code in the time-frequency domain, to obtain the symbol subjected to secondary spectrum spreading.

5. The spectrum spreading method according to claim 1, wherein the performing (202), based on a target spectrum spreading code, spectrum spreading on the modulation symbol in the transform domain, to obtain a symbol subjected to spectrum spreading comprises:
performing, based on target spectrum spreading codes corresponding to layers, spectrum spreading on modulation symbols corresponding to the layers in the transform domain in a case of single-user multi-layer transmission; and superimposing spectrum spreading results corresponding to the layers, to obtain the symbol subjected to spectrum spreading.

6. The spectrum spreading method according to claim 1, wherein the performing (202), based on a target spectrum spreading code, spectrum spreading on the modulation symbol in the transform domain, to obtain a symbol subjected to spectrum spreading comprises:

performing, based on target spectrum spreading codes corresponding to users, spectrum spreading on modulation symbols corresponding to the users in the transform domain in a case of multi-user transmission; and superimposing spectrum spreading results corresponding to the users, to obtain the symbol subjected to spectrum spreading.

7. The spectrum spreading method according to claim 1, wherein the method further comprises:

obtaining a plurality of spectrum spreading codes; and
interleaving the plurality of spectrum spreading codes, to obtain the target spectrum spreading code.

8. A spectrum spreading apparatus (1000), comprising

a first obtaining module (1001), configured to obtain a modulation symbol mapped to a transform domain, wherein the modulation symbol mapped to the transform domain is represented using a two-dimensional modulation symbol set, the transform domain refers to any domain in which the modulation symbol is represented by the two-dimensional modulation symbol set; and
a first spectrum spreading module (1002), configured to perform, based on a target spectrum spreading code, spectrum spreading on the modulation symbol in the transform domain, to obtain a symbol subjected to spectrum spreading;
wherein the first spectrum spreading module is specifically configured to perform any one of the following:

performing, based on the target spectrum spreading code, spectrum spreading on the modulation symbol row by row in the transform domain, to obtain the symbol subjected to spectrum spreading;
performing, based on the target spectrum spreading code, spectrum spreading on the modulation symbol column by column in the transform domain, to obtain the symbol subjected to spectrum spreading;
performing, based on the target spectrum spreading code, spectrum spreading on the modulation symbol sequentially row by row and column by column in the transform domain, to obtain the symbol subjected to spectrum spreading; and
performing, based on the target spectrum spreading code, spectrum spreading on the modulation symbol sequentially column by column and row by row in the transform domain, to obtain the symbol subjected to spectrum spreading;
wherein the first spectrum spreading module is specifically configured to:

when the target spectrum spreading code comprises a first spectrum spreading code and the first spectrum spreading code is a row vector, perform a Kronecker product operation on the modulation symbol and the first spectrum spreading code in the transform domain, to obtain a first spectrum spreading symbol; and
transform the first spectrum spreading symbol from the transform domain to a time-frequency domain, to obtain the symbol subjected to spectrum spreading;
or,
wherein the first spectrum spreading module is specifically configured to:

when the target spectrum spreading code comprises a second spectrum spreading code and the second spectrum spreading code is a column vector, perform a Kronecker product operation on the modulation symbol and the second spectrum spreading code in the transform domain, to obtain a third spectrum spreading symbol; and

transform the third spectrum spreading symbol from the transform domain to a time-frequency domain, to obtain the symbol subjected to spectrum spreading;

or,

wherein the first spectrum spreading module is specifically configured to:

when the target spectrum spreading code comprises a first spectrum spreading code and a second spectrum spreading code, the first spectrum spreading code is a row vector, and the second spectrum spreading code is a column vector, perform a Kronecker product operation on the modulation symbol and the first spectrum spreading code in the transform domain, to obtain a first spectrum spreading symbol;

perform a Kronecker product operation on the first spectrum spreading symbol and the second spectrum spreading code in the transform domain, to obtain a fifth spectrum spreading symbol; and

transform the fifth spectrum spreading symbol from the transform domain to a time-frequency domain, to obtain the symbol subjected to spectrum spreading;

or,

wherein the first spectrum spreading module is specifically configured to:

when the target spectrum spreading code comprises a first spectrum spreading code and a second spectrum spreading code, the first spectrum spreading code is a row vector, and the second spectrum spreading code is a column vector, perform a Kronecker product operation on the modulation symbol and the second spectrum spreading code in the transform domain, to obtain a third spectrum spreading symbol;

perform a Kronecker product operation on the third spectrum spreading symbol and the first spectrum spreading code in the transform domain, to obtain a fifth spectrum spreading symbol; and

transform the fifth spectrum spreading symbol from the transform domain to a time-frequency domain, to obtain the symbol subjected to spectrum spreading.

9. The spectrum spreading apparatus according to claim 8, further comprising:
a second spectrum spreading module, configured to perform, in the time-frequency domain, secondary spectrum spreading on the symbol subjected to spectrum spreading, to obtain a symbol subjected to secondary spectrum spreading.

10. The spectrum spreading apparatus according to claim 9, wherein the second spectrum spreading module is specifically configured to: perform, in the time-frequency domain, spectrum spreading on the symbol subjected to spectrum spreading row by row and/or column by column, to obtain the symbol subjected to secondary spectrum spreading.

11. The spectrum spreading apparatus according to claim 10, wherein the second spectrum spreading module is specifically configured to perform any one of the following:

performing a Kronecker product operation on the symbol subjected to spectrum spreading and a third spectrum spreading code in the time-frequency domain, to obtain the symbol subjected to secondary spectrum spreading, wherein the third spectrum spreading code is a row vector;

performing a Kronecker product operation on the symbol subjected to spectrum spreading and a fourth spectrum spreading code in the time-frequency domain, to obtain the symbol subjected to secondary spectrum spreading, wherein the fourth spectrum spreading code is a column vector;

performing a Kronecker product operation on the symbol subjected to spectrum spreading sequentially with the third spectrum spreading code and the fourth spectrum spreading code in the time-frequency domain, to obtain the symbol subjected to secondary spectrum spreading; and

performing a Kronecker product operation on the symbol subjected to spectrum spreading sequentially with the fourth spectrum spreading code and the third spectrum spreading code in the time-frequency domain, to obtain the symbol subjected to secondary spectrum spreading.

12. The spectrum spreading apparatus according to claim 8, wherein the first spectrum spreading module is specifically configured to:

perform, based on target spectrum spreading codes corresponding to layers, spectrum spreading on modulation symbols corresponding to the layers in the transform domain in a case of single-user multi-layer transmission; and superimpose spectrum spreading results corresponding to the layers, to obtain the symbol subjected to spectrum spreading.

13. The spectrum spreading apparatus according to claim 8, wherein the first spectrum spreading module is specifically configured to:

perform, based on target spectrum spreading codes corresponding to users, spectrum spreading on modulation symbols corresponding to the users in the transform domain in a case of multi-user transmission; and superimpose spectrum spreading results corresponding to the users, to obtain the symbol subjected to spectrum spreading.

14. The spectrum spreading apparatus according to claim 8, wherein the apparatus further comprises:

a second obtaining module, configured to obtain a plurality of spectrum spreading codes; and an interleaving module, configured to interleave the plurality of spectrum spreading codes, to obtain the target spectrum spreading code.

15. A readable storage medium, storing a program or an instruction, and when being executed by a processor, the program or the instruction causes the processor to carry out the spectrum spreading method according to any one of claims 1 to 7.

**Patentansprüche**

1. Spektrumspreizungsverfahren, umfassend:

Erhalten (201) eines Modulationssymbols, das auf einen Transformationsbereich abgebildet ist, wobei das auf den Transformationsbereich abgebildete Modulationssymbol unter Verwendung eines zweidimensionalen Modulationssymbolsatzes dargestellt wird, der Transformationsbereich sich auf einen beliebigen Bereich bezieht, in dem das Modulationssymbol durch den zweidimensionalen Modulationssymbolsatz dargestellt wird; und Durchführen (202), basierend auf einem Ziel-Spektrumspreizungscode, einer Spektrumspreizung an dem Modulationssymbol in dem Transformationsbereich, um ein einer Spektrumspreizung unterzogenes Symbol zu erhalten; wobei das Durchführen (202), basierend auf einem Ziel-Spektrumspreizungscode, einer Spektrumspreizung an dem Modulationssymbol in dem Transformationsbereich, um ein einer Spektrumspreizung unterzogenes Symbol zu erhalten, eines von Folgenden umfasst:

Durchführen, basierend auf dem Ziel-Spektrumspreizungscode, einer Spektrumspreizung an dem Modulationssymbol zeilenweise in dem Transformationsbereich, um das einer Spektrumspreizung unterzogene Symbol zu erhalten; Durchführen, basierend auf dem Ziel-Spektrumspreizungscode, einer Spektrumspreizung an dem Modulationssymbol spaltenweise in dem Transformationsbereich, um das einer Spektrumspreizung unterzogene Symbol zu erhalten; Durchführen, basierend auf dem Ziel-Spektrumspreizungscode, einer Spektrumspreizung an dem Modulationssymbol sequenziell zeilenweise und spaltenweise in dem Transformationsbereich, um das einer Spektrumspreizung unterzogene Symbol zu erhalten; und Durchführen, basierend auf dem Ziel-Spektrumspreizungscode, einer Spektrumspreizung an dem Modulationssymbol sequenziell spaltenweise und zeilenweise in dem Transformationsbereich, um das einer Spektrumspreizung unterzogene Symbol zu erhalten; wobei, wenn der Ziel-Spektrumspreizungscode einen ersten Spektrumspreizungscode umfasst und der erste Spektrumspreizungscode ein Zeilenvektor ist, das Durchführen, basierend auf dem Ziel-Spektrumspreizungscode, einer Spektrumspreizung an dem Modulationssymbol zeilenweise in dem Transformationsbereich, um das einer Spektrumspreizung unterzogene Symbol zu erhalten, umfasst:

Durchführen (401) einer Kronecker-Produkt-Operation an dem Modulationssymbol und dem ersten Spektrumspreizungscode in dem Transformationsbereich, um ein erstes Spektrumspreizungssymbol zu erhalten; und

Transformieren (402) des ersten Spektrumspreizungssymbols aus dem Transformationsbereich in einen Zeit-Frequenz-Bereich, um das einer Spektrumspreizung unterzogene Symbol zu erhalten; oder,

wobei, wenn der Ziel-Spektrumspreizungscode einen zweiten Spektrumspreizungscode umfasst und der zweite Spektrumspreizungscode ein Spaltenvektor ist, das Durchführen, basierend auf dem Ziel-Spektrumspreizungscode, einer Spektrumspreizung an dem Modulationssymbol spaltenweise in dem Transformationsbereich, um das einer Spektrumspreizung unterzogene Symbol zu erhalten, umfasst:

Durchführen (501) einer Kronecker-Produkt-Operation an dem Modulationssymbol und dem zweiten Spektrumspreizungscode in dem Transformationsbereich, um ein drittes Spektrumspreizungssymbol zu erhalten; und

Transformieren (502) des dritten Spektrumspreizungssymbols aus dem Transformationsbereich in einen Zeit-Frequenz-Bereich, um das einer Spektrumspreizung unterzogene Symbol zu erhalten; oder,

wobei, wenn der Ziel-Spektrumspreizungscode einen ersten Spektrumspreizungscode und einen zweiten Spektrumspreizungscode umfasst, der erste Spektrumspreizungscode ein Zeilenvektor ist, und der zweite Spektrumspreizungscode ein Spaltenvektor ist, das Durchführen, basierend auf dem Ziel-Spektrumspreizungscode, einer Spektrumspreizung an dem Modulationssymbol sequenziell zeilenweise und spaltenweise in dem Transformationsbereich, um das einer Spektrumspreizung unterzogene Symbol zu erhalten, umfasst:

Durchführen (601) einer Kronecker-Produkt-Operation an dem Modulationssymbol und dem ersten Spektrumspreizungscode in dem Transformationsbereich, um ein erstes Spektrumspreizungssymbol zu erhalten;

Durchführen einer Kronecker-Produkt-Operation an dem ersten Spektrumspreizungssymbol und dem zweiten Spektrumspreizungscode in dem Transformationsbereich, um ein fünftes Spektrumspreizungssymbol zu erhalten; und

Transformieren (602) des fünften Spektrumspreizungssymbols aus dem Transformationsbereich in einen Zeit-Frequenz-Bereich, um das einer Spektrumspreizung unterzogene Symbol zu erhalten; oder,

wobei, wenn der Ziel-Spektrumspreizungscode einen ersten Spektrumspreizungscode und einen zweiten Spektrumspreizungscode umfasst, der erste Spektrumspreizungscode ein Zeilenvektor ist, und der zweite Spektrumspreizungscode ein Spaltenvektor ist, das Durchführen, basierend auf dem Ziel-Spektrumspreizungscode, einer Spektrumspreizung an dem Modulationssymbol sequenziell spaltenweise und zeilenweise in dem Transformationsbereich, um das einer Spektrumspreizung unterzogene Symbol zu erhalten, umfasst:

Durchführen (801) einer Kronecker-Produkt-Operation an dem Modulationssymbol und dem zweiten Spektrumspreizungscode in dem Transformationsbereich, um ein drittes Spektrumspreizungssymbol zu erhalten;

Durchführen einer Kronecker-Produkt-Operation an dem dritten Spektrumspreizungssymbol und dem ersten Spektrumspreizungscode in dem Transformationsbereich, um ein fünftes Spektrumspreizungssymbol zu erhalten; und

Transformieren (802) des fünften Spektrumspreizungssymbols aus dem Transformationsbereich in einen Zeit-Frequenz-Bereich, um das einer Spektrumspreizung unterzogene Symbol zu erhalten.

2. Spektrumspreizungsverfahren nach Anspruch 1, wobei nach dem Durchführen (202), basierend auf einem Ziel-Spektrumspreizungscode, einer Spektrumspreizung an dem Modulationssymbol in dem Transformationsbereich, um ein einer Spektrumspreizung unterzogenes Symbol zu erhalten, das Spektrumspreizungsverfahren ferner umfasst:
Durchführen (303), in dem Zeit-Frequenz-Bereich, einer sekundären Spektrumspreizung an dem einer Spektrumspreizung unterzogenen Symbol, um ein einer sekundären Spektrumspreizung unterzogenes Symbol zu erhalten.

3. Spektrumspreizungsverfahren nach Anspruch 2, wobei das Durchführen (303), in dem Zeit-Frequenz-Bereich, einer sekundären Spektrumspreizung an dem einer Spektrumspreizung unterzogenen Symbol, um ein einer sekundären Spektrumspreizung unterzogenes Symbol zu erhalten, umfasst:
Durchführen, in dem Zeit-Frequenz-Bereich, einer Spektrumspreizung an dem einer Spektrumspreizung unterzogenen Symbol zeilenweise und/oder spaltenweise, um das einer sekundären Spektrumspreizung unterzogene Symbol zu erhalten.

4. Spektrumspreizungsverfahren nach Anspruch 3, wobei das Durchführen, in dem Zeit-Frequenz-Bereich, einer Spektrumspreizung an dem einer Spektrumspreizung unterzogenen Symbol zeilenweise und/oder spaltenweise, um das einer sekundären Spektrumspreizung unterzogene Symbol zu erhalten, umfasst eines von Folgenden:

Durchführen einer Kronecker-Produkt-Operation an dem einer Spektrumspreizung unterzogenen Symbol und einem dritten Spektrumspreizungscode in dem Zeit-Frequenz-Bereich, um das einer sekundären Spektrumspreizung unterzogene Symbol zu erhalten, wobei der dritte Spektrumspreizungscode ein Zeilenvektor ist;
Durchführen einer Kronecker-Produkt-Operation an dem einer Spektrumspreizung unterzogenen Symbol und einem vierten Spektrumspreizungscode in dem Zeit-Frequenz-Bereich, um das einer sekundären Spektrumspreizung unterzogene Symbol zu erhalten, wobei der vierte Spektrumspreizungscode ein Spaltenvektor ist;
Durchführen einer Kronecker-Produkt-Operation an dem einer Spektrumspreizung unterzogenen Symbol sequenziell mit dem dritten Spektrumspreizungscode und dem vierten Spektrumspreizungscode in dem Zeit-Frequenz-Bereich, um das einer sekundären Spektrumspreizung unterzogene Symbol zu erhalten; und
Durchführen einer Kronecker-Produkt-Operation an dem einer Spektrumspreizung unterzogenen Symbol sequenziell mit dem vierten Spektrumspreizungscode und dem dritten Spektrumspreizungscode in dem Zeit-Frequenz-Bereich, um das einer sekundären Spektrumspreizung unterzogene Symbol zu erhalten.

5. Spektrumspreizungsverfahren nach Anspruch 1, wobei das Durchführen (202), basierend auf einem Ziel-Spektrumspreizungscode, einer Spektrumspreizung an dem Modulationssymbol in dem Transformationsbereich, um ein einer Spektrumspreizung unterzogenes Symbol zu erhalten, umfasst:

Durchführen, basierend auf Ziel-Spektrumspreizungscodes, die Schichten entsprechen, einer Spektrumspreizung an Modulationssymbolen, die den Schichten entsprechen, in dem Transformationsbereich in einem Fall einer Mehrschichtübertragung eines einzelnen Benutzers; und
Überlagern von Spektrumspreizungsergebnissen, die den Schichten entsprechen, um das einer Spektrumspreizung unterzogene Symbol zu erhalten.

6. Spektrumspreizungsverfahren nach Anspruch 1, wobei das Durchführen (202), basierend auf einem Ziel-Spektrumspreizungscode, einer Spektrumspreizung an dem Modulationssymbol in dem Transformationsbereich, um ein einer Spektrumspreizung unterzogenes Symbol zu erhalten, umfasst:

Durchführen, basierend auf Ziel-Spektrumspreizungscodes, die Benutzern entsprechen, einer Spektrumspreizung an Modulationssymbolen, die den Benutzern entsprechen, in dem Transformationsbereich in einem Fall einer Mehrbenutzerübertragung; und
Überlagern von Spektrumspreizungsergebnissen, die den Benutzern entsprechen, um das einer Spektrumspreizung unterzogene Symbol zu erhalten.

7. Spektrumspreizungsverfahren nach Anspruch 1, wobei das Verfahren ferner umfasst:

Erhalten einer Vielzahl von Spektrumspreizungscodes; und
Verschachteln der Vielzahl von Spektrumspreizungscodes, um den Ziel-Spektrumspreizungscode zu erhalten.

8. Spektrumspreizungsvorrichtung (1000), umfassend

ein erstes Erhaltungsmodul (1001), das konfiguriert ist, ein Modulationssymbol zu erhalten, das auf einen Transformationsbereich abgebildet ist, wobei das auf den Transformationsbereich abgebildete Modulationssymbol unter Verwendung eines zweidimensionalen Modulationssymbolsatzes dargestellt wird, der Transformationsbereich sich auf einen beliebigen Bereich bezieht, in dem das Modulationssymbol durch den zweidimensionalen Modulationssymbolsatz dargestellt wird; und
ein erstes Spektrumspreizungsmodul (1002), das konfiguriert ist, basierend auf einem Ziel-Spektrumspreizungscode, eine Spektrumspreizung an dem Modulationssymbol in dem Transformationsbereich durchzuführen, um ein einer Spektrumspreizung unterzogenes Symbol zu erhalten;
wobei das erste Spektrumspreizungsmodul spezifisch konfiguriert ist, eines von Folgenden durchzuführen:

Durchführen, basierend auf dem Ziel-Spektrumspreizungscode, einer Spektrumspreizung an dem Modulationssymbol zeilenweise in dem Transformationsbereich, um das einer Spektrumspreizung unterzogene Symbol zu erhalten;
Durchführen, basierend auf dem Ziel-Spektrumspreizungscode, einer Spektrumspreizung an dem Modulationssymbol spaltenweise in dem Transformationsbereich, um das einer Spektrumspreizung unterzogene Symbol zu erhalten;
Durchführen, basierend auf dem Ziel-Spektrumspreizungscode, einer Spektrumspreizung an dem Modulationssymbol sequenziell zeilenweise und spaltenweise in dem Transformationsbereich, um das einer Spektrumspreizung unterzogene Symbol zu erhalten; und
Durchführen, basierend auf dem Ziel-Spektrumspreizungscode, einer Spektrumspreizung an dem Modulationssymbol sequenziell spaltenweise und zeilenweise in dem Transformationsbereich, um das einer Spektrumspreizung unterzogene Symbol zu erhalten;
wobei das erste Spektrumspreizungsmodul spezifisch dazu konfiguriert ist:

wenn der Ziel-Spektrumspreizungscode einen ersten Spektrumspreizungscode umfasst und der erste Spektrumspreizungscode ein Zeilenvektor ist, Durchführen einer Kronecker-Produkt-Operation an dem Modulationssymbol und dem ersten Spektrumspreizungscode in dem Transformationsbereich, um ein erstes Spektrumspreizungssymbol zu erhalten; und
Transformieren des ersten Spektrumspreizungssymbols aus dem Transformationsbereich in einen Zeit-Frequenz-Bereich, um das einer Spektrumspreizung unterzogene Symbol zu erhalten;
oder,
wobei das erste Spektrumspreizungsmodul spezifisch dazu konfiguriert ist:

wenn der Ziel-Spektrumspreizungscode einen zweiten Spektrumspreizungscode umfasst und der zweite Spektrumspreizungscode ein Spaltenvektor ist, Durchführen einer Kronecker-Produkt-Operation an dem Modulationssymbol und dem zweiten Spektrumspreizungscode in dem Transformationsbereich, um ein drittes Spektrumspreizungssymbol zu erhalten; und
Transformieren des dritten Spektrumspreizungssymbols aus dem Transformationsbereich in einen Zeit-Frequenz-Bereich, um das einer Spektrumspreizung unterzogene Symbol zu erhalten;
oder,
wobei das erste Spektrumspreizungsmodul spezifisch dazu konfiguriert ist:

wenn der Ziel-Spektrumspreizungscode einen ersten Spektrumspreizungscode und einen zweiten Spektrumspreizungscode umfasst, der erste Spektrumspreizungscode ein Zeilenvektor ist, und der zweite Spektrumspreizungscode ein Spaltenvektor ist, Durchführen einer Kronecker-Produkt-Operation an dem Modulationssymbol und dem ersten Spektrumspreizungscode in dem Transformationsbereich, um ein erstes Spektrumspreizungssymbol zu erhalten;
Durchführen einer Kronecker-Produkt-Operation an dem ersten Spektrumspreizungssymbol und dem zweiten Spektrumspreizungscode in dem Transformationsbereich, um ein fünftes Spektrumspreizungssymbol zu erhalten; und
Transformieren des fünften Spektrumspreizungssymbols aus dem Transformationsbereich in einen Zeit-Frequenz-Bereich, um das einer Spektrumspreizung unterzogene Symbol zu erhalten;
oder,
wobei das erste Spektrumspreizungsmodul spezifisch dazu konfiguriert ist:

wenn der Ziel-Spektrumspreizungscode einen ersten Spektrumspreizungscode und einen zweiten Spektrumspreizungscode umfasst, der erste Spektrumspreizungscode ein Zeilenvektor ist, und der zweite Spektrumspreizungscode ein Spaltenvektor ist, Durchführen einer Kronecker-Produkt-Operation an dem Modulationssymbol und dem zweiten Spektrumspreizungscode in dem Transformationsbereich, um ein drittes Spektrumspreizungssymbol zu erhalten;
Durchführen einer Kronecker-Produkt-Operation an dem dritten Spektrumspreizungssymbol und dem ersten Spektrumspreizungscode in dem Transformationsbereich, um ein fünftes Spektrumspreizungssymbol zu erhalten; und

Transformieren des fünften Spektrumspreizungssymbols aus dem Transformationsbereich in einen Zeit-Frequenz-Bereich, um das einer Spektrumspreizung unterzogene Symbol zu erhalten.

9. Spektrumspreizungsvorrichtung nach Anspruch 8, ferner umfassend:
ein zweites Spektrumspreizungsmodul, das konfiguriert ist, in dem Zeit-Frequenz-Bereich eine sekundäre Spektrumspreizung an dem einer Spektrumspreizung unterzogenen Symbol durchzuführen, um ein einer sekundären Spektrumspreizung unterzogenes Symbol zu erhalten.

10. Spektrumspreizungsvorrichtung nach Anspruch 9, wobei das zweite Spektrumspreizungsmodul spezifisch konfiguriert ist, in dem Zeit-Frequenz-Bereich eine Spektrumspreizung an dem einer Spektrumspreizung unterzogenen Symbol zeilenweise und/oder spaltenweise durchzuführen, um das einer sekundären Spektrumspreizung unterzogene Symbol zu erhalten.

11. Spektrumspreizungsvorrichtung nach Anspruch 10, wobei das zweite Spektrumspreizungsmodul spezifisch konfiguriert ist, eines von Folgenden durchzuführen:

Durchführen einer Kronecker-Produkt-Operation an dem einer Spektrumspreizung unterzogenen Symbol und einem dritten Spektrumspreizungscode in dem Zeit-Frequenz-Bereich, um das einer sekundären Spektrumspreizung unterzogene Symbol zu erhalten, wobei der dritte Spektrumspreizungscode ein Zeilenvektor ist;
Durchführen einer Kronecker-Produkt-Operation an dem einer Spektrumspreizung unterzogenen Symbol und einem vierten Spektrumspreizungscode in dem Zeit-Frequenz-Bereich, um das einer sekundären Spektrumspreizung unterzogene Symbol zu erhalten, wobei der vierte Spektrumspreizungscode ein Spaltenvektor ist;
Durchführen einer Kronecker-Produkt-Operation an dem einer Spektrumspreizung unterzogenen Symbol sequenziell mit dem dritten Spektrumspreizungscode und dem vierten Spektrumspreizungscode in dem Zeit-Frequenz-Bereich, um das einer sekundären Spektrumspreizung unterzogene Symbol zu erhalten; und
Durchführen einer Kronecker-Produkt-Operation an dem einer Spektrumspreizung unterzogenen Symbol sequenziell mit dem vierten Spektrumspreizungscode und dem dritten Spektrumspreizungscode in dem Zeit-Frequenz-Bereich, um das einer sekundären Spektrumspreizung unterzogene Symbol zu erhalten.

12. Spektrumspreizungsvorrichtung nach Anspruch 8, wobei das erste Spektrumspreizungsmodul spezifisch dazu konfiguriert ist:

Durchführen, basierend auf Ziel-Spektrumspreizungscodes, die Schichten entsprechen, einer Spektrumspreizung an Modulationssymbolen, die den Schichten entsprechen, in dem Transformationsbereich in einem Fall einer Mehrschichtübertragung eines einzelnen Benutzers; und
Überlagern von Spektrumspreizungsergebnissen, die den Schichten entsprechen, um das einer Spektrumspreizung unterzogene Symbol zu erhalten.

13. Spektrumspreizungsvorrichtung nach Anspruch 8, wobei das erste Spektrumspreizungsmodul spezifisch dazu konfiguriert ist:

Durchführen, basierend auf Ziel-Spektrumspreizungscodes, die Benutzern entsprechen, einer Spektrumspreizung an Modulationssymbolen, die den Benutzern entsprechen, in dem Transformationsbereich in einem Fall einer Mehrbenutzerübertragung; und
Überlagern von Spektrumspreizungsergebnissen, die den Benutzern entsprechen, um das einer Spektrumspreizung unterzogene Symbol zu erhalten.

14. Spektrumspreizungsvorrichtung nach Anspruch 8, wobei die Vorrichtung ferner umfasst:

ein zweites Erhaltungsmodul, das konfiguriert ist, eine Vielzahl von Spektrumspreizungscodes zu erhalten; und
ein Verschachtelungsmodul, das konfiguriert ist, die Vielzahl von Spektrumspreizungscodes zu verschachteln, um den Ziel-Spektrumspreizungscode zu erhalten.

15. Lesbares Speichermedium, das ein Programm oder eine Anweisung speichert, und wobei, wenn es durch einen Prozessor ausgeführt wird, das Programm oder die Anweisung den Prozessor veranlasst, das Spektrumspreizungsverfahren nach einem der Ansprüche 1 bis 7 auszuführen.

**Revendications**

1.  Une méthode d'étalement de spectre, comprenant :

    - l'obtention (201) d'un symbole de modulation mappé sur un domaine de transformation, où le symbole de modulation mappé sur le domaine de transformation est représenté en utilisant un ensemble de symboles bidimensionnel, le domaine de transformation faisant référence à tout domaine dans lequel le symbole de modulation est représenté par l'ensemble de symboles bidimensionnel ; et
    - la réalisation (202), sur la base d'un code d'étalement de spectre cible, d'un étalement de spectre sur le symbole de modulation dans le domaine de transformation, afin d'obtenir un symbole soumis à un étalement de spectre ;

    où la réalisation (202), sur la base d'un code d'étalement de spectre cible, d'un étalement de spectre sur le symbole de modulation dans le domaine de transformation, afin d'obtenir un symbole soumis à un étalement de spectre comprend l'une quelconque des options suivantes :

    ◦ la réalisation, sur la base du code d'étalement de spectre cible, d'un étalement de spectre sur le symbole de modulation ligne par ligne dans le domaine de transformation, afin d'obtenir le symbole soumis à un étalement de spectre ;
    ◦ la réalisation, sur la base du code d'étalement de spectre cible, d'un étalement de spectre sur le symbole de modulation colonne par colonne dans le domaine de transformation, afin d'obtenir le symbole soumis à un étalement de spectre ;
    ◦ la réalisation, sur la base du code d'étalement de spectre cible, d'un étalement de spectre sur le symbole de modulation de manière séquentielle ligne par ligne et colonne par colonne dans le domaine de transformation, afin d'obtenir le symbole soumis à un étalement de spectre ; et
    ◦ la réalisation, sur la base du code d'étalement de spectre cible, d'un étalement de spectre sur le symbole de modulation de manière séquentielle colonne par colonne et ligne par ligne dans le domaine de transformation, afin d'obtenir le symbole soumis à un étalement de spectre ;

    où, lorsque le code d'étalement de spectre cible comprend un premier code d'étalement de spectre et que le premier code d'étalement de spectre est un vecteur ligne, la réalisation (401), sur la base du code d'étalement de spectre cible, d'un étalement de spectre sur le symbole de modulation ligne par ligne dans le domaine de transformation, afin d'obtenir le symbole soumis à un étalement de spectre comprend :

    la réalisation (401) d'une opération de produit de Kronecker sur le symbole de modulation et le premier code d'étalement de spectre dans le domaine de transformation, afin d'obtenir un premier symbole d'étalement de spectre ; et
    la transformation (402) du premier symbole d'étalement de spectre du domaine de transformation vers un domaine temps-fréquence, afin d'obtenir le symbole soumis à un étalement de spectre ;
    ou,
    où, lorsque le code d'étalement de spectre cible comprend un deuxième code d'étalement de spectre et que le deuxième code d'étalement de spectre est un vecteur colonne, la réalisation (501), sur la base du code d'étalement de spectre cible, d'un étalement de spectre sur le symbole de modulation colonne par colonne dans le domaine de transformation, afin d'obtenir le symbole soumis à un étalement de spectre comprend :

    la réalisation d'une opération de produit de Kronecker sur le symbole de modulation et le deuxième code d'étalement de spectre dans le domaine de transformation, afin d'obtenir un troisième symbole d'étalement de spectre ; et
    la transformation (502) du troisième symbole d'étalement de spectre du domaine de transformation vers un domaine temps-fréquence, afin d'obtenir le symbole soumis à un étalement de spectre ;
    ou,
    où, lorsque le code d'étalement de spectre cible comprend un premier code d'étalement de spectre et un deuxième code d'étalement de spectre, le premier code d'étalement de spectre est un vecteur ligne et le deuxième code d'étalement de spectre est un vecteur colonne, la réalisation (601), sur la base du code d'étalement de spectre cible, d'un étalement de spectre sur le symbole de modulation de manière séquentielle ligne par ligne et colonne par colonne dans le domaine de transformation, afin d'obtenir le symbole soumis à un étalement de spectre comprend :

◦ la réalisation (601) d'une opération de produit de Kronecker sur le symbole de modulation et le premier code d'étalement de spectre dans le domaine de transformation, afin d'obtenir un premier symbole d'étalement de spectre ;

◦ la réalisation d'une opération de produit de Kronecker sur le premier symbole d'étalement de spectre et le deuxième code d'étalement de spectre dans le domaine de transformation, afin d'obtenir un cinquième symbole d'étalement de spectre ; et

◦ la transformation (602) du cinquième symbole d'étalement de spectre du domaine de transformation vers un domaine temps-fréquence, afin d'obtenir le symbole soumis à un étalement de spectre ;

ou,

où, lorsque le code d'étalement de spectre cible comprend un premier code d'étalement de spectre et un deuxième code d'étalement de spectre, le premier code d'étalement de spectre est un vecteur ligne et le deuxième code d'étalement de spectre est un vecteur colonne, la réalisation (801), sur la base du code d'étalement de spectre cible, d'un étalement de spectre sur le symbole de modulation de manière séquentielle colonne par colonne et ligne par ligne dans le domaine de transformation, afin d'obtenir le symbole soumis à un étalement de spectre comprend :

◦ la réalisation (801) d'une opération de produit de Kronecker sur le symbole de modulation et le deuxième code d'étalement de spectre dans le domaine de transformation, afin d'obtenir un troisième symbole d'étalement de spectre ;

◦ la réalisation d'une opération de produit de Kronecker sur le troisième symbole d'étalement de spectre et le premier code d'étalement de spectre dans le domaine de transformation, afin d'obtenir un cinquième symbole d'étalement de spectre ; et

◦ la transformation (802) du cinquième symbole d'étalement de spectre du domaine de transformation vers un domaine temps-fréquence, afin d'obtenir le symbole soumis à un étalement de spectre.

2. La méthode d'étalement de spectre selon la revendication 1, où, après la réalisation (202), sur la base d'un code d'étalement de spectre cible, d'un étalement de spectre sur le symbole de modulation dans le domaine de transformation, afin d'obtenir un symbole soumis à un étalement de spectre, la méthode d'étalement de spectre comprend en outre :

la réalisation (303), dans le domaine temps-fréquence, d'un étalement de spectre secondaire sur le symbole soumis à un étalement de spectre, afin d'obtenir un symbole soumis à un étalement de spectre secondaire.

3. La méthode d'étalement de spectre selon la revendication 2, où la réalisation (303), dans le domaine temps-fréquence, d'un étalement de spectre secondaire sur le symbole soumis à un étalement de spectre, afin d'obtenir un symbole soumis à un étalement de spectre secondaire comprend :

la réalisation, dans le domaine temps-fréquence, d'un étalement de spectre sur le symbole soumis à un étalement de spectre ligne par ligne et/ou colonne par colonne, pour obtenir le symbole soumis à un étalement de spectre secondaire.

4. La méthode d'étalement de spectre selon la revendication 3, où la réalisation, dans le domaine temps-fréquence, d'un étalement de spectre sur le symbole soumis à un étalement de spectre ligne par ligne et/ou colonne par colonne, afin d'obtenir le symbole soumis à un étalement de spectre secondaire, comprend l'une quelconque des options suivantes :

la réalisation d'une opération de produit de Kronecker sur le symbole soumis à un étalement de spectre et un troisième code d'étalement de spectre dans le domaine temps-fréquence, afin d'obtenir le symbole soumis à un étalement de spectre secondaire, où le troisième code d'étalement de spectre est un vecteur ligne ;

la réalisation d'une opération de produit de Kronecker sur le symbole soumis à un étalement de spectre et un quatrième code d'étalement de spectre dans le domaine temps-fréquence, afin d'obtenir le symbole soumis à un étalement de spectre secondaire, où le quatrième code d'étalement de spectre est un vecteur colonne ;

la réalisation d'une opération de produit de Kronecker sur le symbole soumis à un étalement de spectre et un cinquième code d'étalement de spectre dans le domaine temps-fréquence, afin d'obtenir le symbole soumis à un étalement de spectre secondaire, où le cinquième code d'étalement de spectre est un vecteur ligne, et épandant séquentiellement avec le troisième code d'épandage spectral et le quatrième code d'épandage spectral dans le domaine temps-fréquence, afin d'obtenir le symbole soumis à un épandage spectral secondaire ; et

la réalisation d'une opération de produit de Kronecker sur le symbole soumis à un épandage spectral séquentiellement avec le quatrième code d'épandage spectral et le troisième code d'épandage spectral dans le domaine temps-fréquence, afin d'obtenir le symbole soumis à un épandage spectral secondaire.

5. La méthode d'épandage spectral selon la revendication 1, dans laquelle la réalisation (202), basée sur un code d'épandage spectral cible, d'un épandage spectral sur le symbole de modulation dans le domaine de transformation, afin d'obtenir un symbole soumis à un épandage spectral, comprend :

la réalisation, basée sur des codes d'épandage spectral cibles correspondant à des couches, d'un épandage spectral sur des symboles de modulation correspondant aux couches dans le cas d'une transmission multicouches pour un seul utilisateur ; et
la superposition des résultats d'épandage spectral correspondant aux couches, afin d'obtenir le symbole soumis à un épandage spectral.

6. La méthode d'épandage spectral selon la revendication 1, dans laquelle la réalisation (202), basée sur un code d'épandage spectral cible, d'un épandage spectral sur le symbole de modulation dans le domaine de transformation, afin d'obtenir un symbole soumis à un épandage spectral, comprend :

la réalisation, basée sur des codes d'épandage spectral cibles correspondant à des utilisateurs, d'un épandage spectral sur des symboles de modulation correspondant aux utilisateurs dans le domaine de transformation dans le cas d'une transmission multi-utilisateurs ; et
la superposition des résultats d'épandage spectral correspondant aux utilisateurs, afin d'obtenir le symbole soumis à un épandage spectral.

7. La méthode d'épandage spectral selon la revendication 1, dans laquelle la méthode comprend en outre :

l'obtention d'une pluralité de codes d'épandage spectral ; et
l'entrelacement de la pluralité de codes d'épandage spectral, afin d'obtenir le code d'épandage spectral cible.

8. Un appareil d'épandage spectral (1000), comprenant :

un premier module d'obtention (1001), configuré pour obtenir un symbole de modulation mappé sur un domaine de transformation, le symbole de modulation mappé sur le domaine de transformation étant représenté à l'aide d'un ensemble de symboles de modulation bidimensionnel, le domaine de transformation se référant à tout domaine dans lequel le symbole de modulation est représenté par l'ensemble de symboles de modulation bidimensionnel ; et
un premier module d'épandage spectral (1002), configuré pour réaliser, en fonction d'un code d'épandage spectral cible, un épandage spectral sur le symbole de modulation dans le domaine de transformation, afin d'obtenir un symbole soumis à un épandage spectral ;
dans lequel le premier module d'épandage spectral est spécifiquement configuré pour réaliser l'une quelconque des opérations suivantes :

la réalisation, en fonction du code d'épandage spectral cible, d'un épandage spectral sur le symbole de modulation ligne par ligne dans le domaine de transformation, afin d'obtenir le symbole soumis à un épandage spectral ;
la réalisation, en fonction du code d'épandage spectral cible, d'un épandage spectral sur le symbole de modulation colonne par colonne dans le domaine de transformation, afin d'obtenir le symbole soumis à un épandage spectral ;
la réalisation, en fonction du code d'épandage spectral cible, d'un épandage spectral sur le symbole de modulation séquentiellement ligne par ligne et colonne par colonne dans le domaine de transformation, afin d'obtenir le symbole soumis à un épandage spectral ; et
la réalisation, en fonction du code d'épandage spectral cible, d'un épandage spectral sur le symbole de modulation séquentiellement colonne par colonne et ligne par ligne dans le domaine de transformation, afin d'obtenir le symbole soumis à un épandage spectral ;
dans lequel le premier module d'épandage spectral est spécifiquement configuré pour :

lorsque le code d'épandage spectral cible comprend un premier code d'épandage spectral et que le premier code d'épandage spectral est un vecteur ligne, réaliser une opération de produit de Kronecker

31

sur le symbole de modulation et le premier code d'épandage spectral dans le domaine de transformation, afin d'obtenir un premier symbole d'épandage spectral ; et

transformer le premier symbole d'épandage spectral du domaine de transformation vers un domaine temps-fréquence, afin d'obtenir le symbole soumis à un épandage spectral ;

ou,

dans lequel le premier module d'épandage spectral est spécifiquement configuré pour :

lorsque le code d'épandage spectral cible comprend un deuxième code d'épandage spectral et que le deuxième code d'épandage spectral est un vecteur colonne, réaliser une opération de produit de Kronecker sur le symbole de modulation et le deuxième code d'épandage spectral dans le domaine de transformation, afin d'obtenir un troisième symbole d'épandage spectral ; et

transformer le troisième symbole d'épandage spectral du domaine de transformation vers un domaine temps-fréquence, afin d'obtenir le symbole soumis à un épandage spectral ;

ou,

dans lequel le premier module d'épandage spectral est spécifiquement configuré pour :

lorsque le code d'épandage spectral cible comprend un premier code d'épandage spectral et un deuxième code d'épandage spectral, le premier code d'épandage spectral est un vecteur ligne et le deuxième code d'épandage spectral est un vecteur colonne, réaliser une opération de produit de Kronecker sur le symbole de modulation et le premier code d'épandage spectral dans le domaine de transformation, afin d'obtenir un premier symbole d'épandage spectral ;

réaliser une opération de produit de Kronecker sur le premier symbole d'épandage spectral et le deuxième code d'épandage spectral dans le domaine de transformation, afin d'obtenir un cinquième symbole d'épandage spectral ; et

transformer le cinquième symbole d'épandage spectral du domaine de transformation vers un domaine temps-fréquence, afin d'obtenir le symbole soumis à un épandage spectral ;

ou,

dans lequel le premier module d'épandage spectral est spécifiquement configuré pour :

lorsque le code d'épandage spectral cible comprend un premier code d'épandage spectral et un deuxième code d'épandage spectral, le premier code d'épandage spectral est un vecteur ligne et le deuxième code d'épandage spectral est un vecteur colonne, réaliser une opération de produit de Kronecker sur le symbole de modulation et le deuxième code d'épandage spectral dans le domaine de transformation, afin d'obtenir un troisième symbole d'épandage spectral ;

réaliser une opération de produit de Kronecker sur le troisième symbole d'épandage spectral et le premier code d'épandage spectral dans le domaine de transformation, afin d'obtenir un cinquième symbole d'épandage spectral ; et

transformer le cinquième symbole d'épandage spectral du domaine de transformation vers un domaine temps-fréquence, afin d'obtenir le symbole soumis à un épandage spectral.

9. L'appareil d'épandage spectral selon la revendication 8, comprenant en outre :
un deuxième module d'épandage spectral, configuré pour réaliser, dans le domaine temps-fréquence, un épandage spectral secondaire sur le symbole soumis à un épandage spectral, afin d'obtenir un symbole soumis à un épandage spectral secondaire.

10. L'appareil d'épandage spectral selon la revendication 9, dans lequel le deuxième module d'épandage spectral est spécifiquement configuré pour réaliser, dans le domaine temps-fréquence, un épandage spectral sur le symbole soumis à un épandage spectral ligne par ligne et/ou colonne par colonne, afin d'obtenir le symbole soumis à un épandage spectral secondaire.

11. L'appareil d'épandage spectral selon la revendication 10, dans lequel le deuxième module d'épandage spectral est spécifiquement configuré pour réaliser l'une quelconque des opérations suivantes :

réaliser une opération de produit de Kronecker sur le symbole soumis à un épandage spectral et un troisième code d'épandage spectral dans le domaine temps-fréquence, afin d'obtenir le symbole soumis à un étalement spectral secondaire, dans lequel le troisième code d'étalement spectral est un vecteur ligne ;

effectuant une opération de produit de Kronecker sur le symbole soumis à l'étalement spectral et un quatrième code d'étalement spectral dans le domaine temps-fréquence, afin d'obtenir le symbole soumis à l'étalement spectral secondaire ; dans lequel le quatrième code d'étalement spectral est un vecteur colonne ;
effectuant une opération de produit de Kronecker sur le symbole soumis à l'étalement spectral de manière séquentielle avec le troisième code d'étalement spectral et le quatrième code d'étalement spectral dans le domaine temps-fréquence, afin d'obtenir le symbole soumis à l'étalement spectral secondaire ; et
effectuant une opération de produit de Kronecker sur le symbole soumis à l'étalement spectral de manière séquentielle avec le quatrième code d'étalement spectral et le troisième code d'étalement spectral dans le domaine temps-fréquence, afin d'obtenir le symbole soumis à l'étalement spectral secondaire.

12. L'appareil d'étalement spectral selon la revendication 8, dans lequel le premier module d'étalement spectral est spécifiquement configuré pour :

effectuer, sur la base de codes d'étalement spectral cibles correspondant à des couches, un étalement sur des symboles de modulation correspondant aux couches dans le domaine de transformation, dans le cas d'une transmission multi-couches à utilisateur unique ; et
superposer des résultats d'étalement spectral correspondant aux couches, afin d'obtenir le symbole soumis à l'étalement spectral.

13. L'appareil d'étalement spectral selon la revendication 8, dans lequel le premier module d'étalement spectral est spécifiquement configuré pour :

effectuer, sur la base de codes d'étalement spectral cibles correspondant à des utilisateurs, un étalement sur des symboles de modulation correspondant aux utilisateurs dans le domaine de transformation, dans le cas d'une transmission multi-utilisateurs ; et
superposer des résultats d'étalement spectral correspondant aux utilisateurs, afin d'obtenir le symbole soumis à l'étalement spectral.

14. L'appareil d'étalement spectral selon la revendication 8, dans lequel l'appareil comprend en outre :

un deuxième module d'obtention, configuré pour obtenir une pluralité de codes d'étalement spectral ; et
un module d'entrelacement, configuré pour entrelacer la pluralité de codes d'étalement spectral, afin d'obtenir le code d'étalement spectral cible.

15. Un support de stockage lisible, stockant un programme ou une instruction, et lorsque celui-ci est exécuté par un processeur, le programme ou l'instruction amène le processeur à exécuter la méthode d'étalement spectral selon l'une quelconque des revendications 1 à 7.

## FIG. 1

| Obtain a modulation symbol mapped to a transform domain | 201 |
|---|---|

| Perform, based on a target spectrum spreading code, spectrum spreading on the modulation symbol in the transform domain, to obtain a symbol subjected to spectrum spreading | 202 |
|---|---|

## FIG. 2

| Obtain a modulation symbol mapped to a transform domain | 301 |

| Perform, based on a target spectrum spreading code, spectrum spreading on the modulation symbol in the transform domain, to obtain a symbol subjected to spectrum spreading | 302 |

| Perform, in the time-frequency domain, secondary spectrum spreading on the symbol subjected to spectrum spreading, to obtain a symbol subjected to secondary spectrum spreading | 303 |

## FIG. 3

| Perform a Kronecker product operation on the modulation symbol and the first spectrum spreading code in the transform domain, to obtain a first spectrum spreading symbol | 401 |

| Transform the first spectrum spreading symbol from the transform domain to a time-frequency domain, to obtain the symbol subjected to spectrum spreading | 402 |

## FIG. 4

| Perform a Kronecker product operation on the modulation symbol and the second spectrum spreading code in the transform domain, to obtain a third spectrum spreading symbol | 501 |

| Transform the third spectrum spreading symbol from the transform domain to a time-frequency domain, to obtain the symbol subjected to spectrum spreading | 502 |

## FIG. 5

Perform a Kronecker product operation on the modulation symbol and the first spectrum spreading code in the transform domain, to obtain a first spectrum spreading symbol, and perform a Kronecker product operation on the first spectrum spreading symbol and the second spectrum spreading code, to obtain a fifth spectrum spreading symbol; or perform a Kronecker product operation on the modulation symbol and the second spectrum spreading code in the transform domain, to obtain a third spectrum spreading symbol, and perform a Kronecker product operation on the third spectrum spreading symbol and the first spectrum spreading code, to obtain a fifth spectrum spreading symbol

601

Transform the fifth spectrum spreading symbol from the transform domain to a time-frequency domain, to obtain the symbol subjected to spectrum spreading

602

FIG. 6

Perform a Kronecker product operation on the modulation symbol and the first spectrum spreading code in the transform domain, to obtain a first spectrum spreading symbol

701

Transform the first spectrum spreading symbol from the transform domain to a time-frequency domain, to obtain the symbol subjected to spectrum spreading

702

Perform a Kronecker product operation on the symbol subjected to spectrum spreading and a second spectrum spreading code in the time-frequency domain, to obtain the symbol subjected to secondary spectrum spreading

703

FIG. 7

Perform a Kronecker product operation on the modulation symbol and the second spectrum spreading code in the transform domain, to obtain a third spectrum spreading symbol 801

Transform the third spectrum spreading symbol from the transform domain to a time-frequency domain, to obtain the symbol subjected to spectrum spreading 802

Perform a Kronecker product operation on the symbol subjected to spectrum spreading and a first spectrum spreading code in the time-frequency domain, to obtain the symbol subjected to secondary spectrum spreading 803

## FIG. 8

Transform a modulation symbol mapped to a transform domain from the transform domain to a time-frequency domain, to obtain a first modulation symbol 901

Perform a Kronecker product operation on the first modulation symbol sequentially with the first spectrum spreading code and the second spectrum spreading code in the time-frequency domain, to obtain a spectrum spreading symbol corresponding to the first modulation symbol; or perform a Kronecker product operation on the first modulation symbol sequentially with the second spectrum spreading code and the first spectrum spreading code in the time-frequency domain, to obtain a spectrum spreading symbol corresponding to the first modulation symbol 902

## FIG. 9

1000

Spectrum spreading apparatus

First obtaining module — 1001

First spectrum spreading module — 1002

FIG. 10

1100

Communication device

1101 — Processor ⟺ Memory — 1102

FIG. 11

FIG. 12

FIG. 13

**REFERENCES CITED IN THE DESCRIPTION**

**Patent documents cited in the description**

- CN 202110970685
- US 2021250138 A1
- EP 2865153 B1
- CN 113098818 A

**Non-patent literature cited in the description**

- **SUN JINJING et al.** An Orthogonal Time Frequency Space Direct Sequence Modulation Scheme. *2021 IEEE INTERNATIONAL CONFERENCE ON COMMUNICATIONS WORKSHOPS (ICC WORKSHOPS*, 2021